(19) Europäisches Patentamt / European Patent Office / Office européen des brevets

(11) **EP 2 402 375 B1**

(12) **EUROPEAN PATENT SPECIFICATION**

(45) Date of publication and mention
of the grant of the patent:
**16.04.2014 Bulletin 2014/16**

(51) Int Cl.:
*C08F 8/32* (2006.01)       *B32B 27/32* (2006.01)
*C08J 3/03* (2006.01)       *C08K 5/09* (2006.01)
*C08L 23/36* (2006.01)       *C09D 5/02* (2006.01)
*C09D 123/36* (2006.01)       *C08J 3/05* (2006.01)
*C08K 5/00* (2006.01)       *C08K 5/5425* (2006.01)

(21) Application number: **10746211.1**

(22) Date of filing: **24.02.2010**

(86) International application number:
**PCT/JP2010/052807**

(87) International publication number:
**WO 2010/098331 (02.09.2010 Gazette 2010/35)**

(54) **POLYOLEFIN COPOLYMER, AQUEOUS DISPERSION USING SAID POLYOLEFIN COPOLYMER AND MANUFACTURING METHOD THEREFOR, AND LAMINATE USING SAID POLYOLEFIN COPOLYMER**

POLYOLEFINCOPOLYMER, WÄSSRIGE DISPERSION MIT DIESEM POLYOLEFINCOPOLYMER UND HERSTELLUNGSVERFAHREN DAFÜR SOWIE LAMINAT MIT DIESEM POLYOLEFINCOPOLYMER

COPOLYMÈRE DE POLYOLÉFINE, DISPERSION AQUEUSE UTILISANT LE COPOLYMÈRE DE POLYOLÉFINE ET SON PROCÉDÉ DE FABRICATION, ET STRATIFIÉ UTILISANT LE COPOLYMÈRE DE POLYOLÉFINE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.02.2009 JP 2009042464
28.08.2009 JP 2009198212**

(43) Date of publication of application:
**04.01.2012 Bulletin 2012/01**

(73) Proprietor: **Unitika, Ltd.
Amagasaki-shi, Hyogo 660-0824 (JP)**

(72) Inventors:
• **YANO, Takuma**
Uji-shi
**Kyoto 611-0021 (JP)**
• **ANADA, Arihiro**
Uji-shi
**Kyoto 611-0021 (JP)**

(74) Representative: **Kügele, Bernhard et al
Novagraaf International SA
Chemin de l'Echo 3
1213 Onex (CH)**

(56) References cited:
**JP-A- 5 194 660       JP-A- 6 116 323
JP-A- 2003 119 328**

**EP 2 402 375 B1**

## Description

Technical Field

The present invention relates to an aqueous dispersion obtained from a water-dispersible polyolefin copolymer and a laminate in which a resin layer is obtained from the aqueous dispersion, wherein when the aqueous dispersion is prepared from the water-dispersible polyolefin copolymer, the aqueous dispersion is stable in the acidic region, and the water resistance, the solvent resistance, the cohesiveness to various substrates and the adhesiveness of the coating film obtained from the aqueous dispersion are satisfactory.

Background Art

The polyolefin resins typified by polyethylene and polypropylene are excellent in various properties such as mechanical properties, transparency, electric properties, surface glossiness, chemical resistance, water resistance and solvent resistance, and are used in large amounts in wide applications for vehicles, electricity, packaging, daily miscellaneous commodities and the like. As the methods for utilizing polyolefin resins for such applications, there have been known methods in which polyolefin resins are processed into solutions or aqueous dispersions of polyolefin resins to prepare coating materials. As the coating materials made of polyolefin resins, there have been frequently used solvent-based coating materials prepared by dissolving polyolefins such as chlorinated polyolefins in solvents. However, recently from the viewpoint of the environmental preservation, non-halogenation and reduction of VOC have been being promoted. Accordingly, attempts have been actively made to replace solvent-based coating materials with aqueous coating materials such as aqueous dispersions.

Various performances are demanded for the aqueous dispersions; in general, it is demanded that the performances such as the cohesiveness to various substrates, the adhesiveness, the water resistance, the solvent resistance and the coating film strength of the coating films obtained by applying and drying the aqueous dispersions are excellent. Additionally, the heat resistance is also demanded in the cases where the use temperatures are high as is the case, for example, in applications to vehicles.

In JP2003-119328A, the present applicant has proposed an aqueous dispersion obtained from a polyolefin resin. However, the aqueous dispersion proposed in JP2003-119328A is an anionic aqueous dispersion obtained by neutralizing an acid-modified polyolefin resin with a basic compound. Accordingly, in the acidic region, the resin particles in the aqueous dispersion tend to mutually aggregate, and hence the aqueous dispersion has been unable to maintain a stable form as the case may be. Thus, it has been difficult to mix materials such as compounds, solutions and dispersions stable only in the acidic region with the concerned aqueous dispersion so as to be used as coating materials.

Examples of aqueous resin dispersions stable in the acidic region include cationic aqueous dispersions. In general, known examples of such an aqueous dispersion include aqueous dispersions prepared by dispersing the resins obtained by neutralizing with acids or by quaternarizing with quaternarizing agents the amino-modified resins obtained by introducing compounds containing amino group into resins with the aid of methods such as copolymerization.

For example, the specification of U.S. Patent No. 3444151 describes a method for obtaining a cationic aqueous dispersion in which method a specific amino compound is imide bonded to a styrene-maleic anhydride copolymer to prepare a styrene-aminoalkylmaleimide copolymer, and then a cationic aqueous dispersion is obtained. However, the aqueous dispersion described in the specification of U.S. Patent No. 3444151 includes polystyrene as the main component of the resin, and hence is remarkably poor in the cohesiveness to olefin substrates and the solvent resistance of the coating film. Further, a nonvolatile aqueous dispersing aid is essential for aqueous dispersion preparation, and hence the obtained aqueous dispersion inevitably contains the nonvolatile aqueous dispersing aid. Consequently, the nonvolatile aqueous dispersing aid remains also in the coating film obtained by applying and drying the aqueous dispersion, and hence the water resistance of the coating film is remarkably degraded.

In this way, the presence of the main component of the resin in an aqueous dispersion and a nonvolatile aqueous dispersing aid significantly affects the performances of the coating film obtained from the aqueous dispersion. Accordingly, as the main component of the resin in an aqueous dispersion, a component excellent in the properties such as the water resistance, the solvent resistance and the cohesiveness is preferable, and additionally it is preferable for the aqueous dispersion obtained from the resin to contain no nonvolatile aqueous dispersing aid. Under such circumstances, there has been a high expectation for cationic aqueous dispersions composed of polyolefin resins excellent in the properties such as the water resistance and the solvent resistance.

On the other hand, cationic aqueous dispersions composed of polyethylene resin are extremely small in number, but are heretofore known. For example, JP47-16542A discloses a cationic aqueous dispersion obtained by dispersing, through neutralization with an acid, a copolymer comprising ethylene and an aminoalkyl acrylate having a specific structure. In this case, the particle size of the dispersed copolymer is 100 nm or less.

JP07-76623A discloses a cationic aqueous dispersion obtained by quaternarizing with hydrochloric acid the amino groups in the copolymer comprising ethylene and aminoalkylacrylamide having a specific structure and further by subjecting the resulting quaternarized copolymer to addition reactions with an epihalohydrin compound and alkylolamine. In this case, the particle size of the quaternarized copolymer is 100 nm or less.

The polyethylene copolymer used in JP47-16542A does not necessarily require a nonvolatile aqueous dispersing aid for aqueous dispersion preparation. However, for the purpose of facilitating the preparation of an aqueous dispersion, the content of the aminoalkyl acrylate component (copolymerization ratio) is required to be set at 20% by mass or more (about 2.5 mol% or more in terms of moles). Accordingly, the properties such as the water resistance and the solvent resistance of the dried coating film obtained from the aqueous dispersion are sometimes insufficient. Additionally, at the time of polymerization, preparation of an aqueous dispersion and storage of the resulting aqueous dispersion, the structure of the aminoalkyl acylate, which is the resin component, is sometimes hydrolyzed, and accordingly, disadvantageously during the storage the resin in the aqueous dispersion aggregates and the performances of the aqueous dispersion are altered.

Similarly, in the polyethylene copolymer used in JP07-76623A, the amino modification amount required for the preparation of an aqueous dispersion is 20% by mass or more (about 2.5 mol% or more in terms of moles). Accordingly, due to the same reasons as described above, the properties such as the water resistance and the solvent resistance of the obtained coating film are not sufficient. Further, it is essential that, for the purpose of enabling an aqueous dispersion to be prepared, the amino groups in the resin are quaternarized with hydrochloric acid, and additionally an epihalohydrin compound is subjected to an addition reaction with the resin. Thus, due to the reaction product produced by the addition reaction, the water resistance and the cohesiveness of the dried coating film tend to be more degraded. The polyethylene copolymer used is obtained by copolymerizing ethylene and a specific aminoalkylacrylamide. Such an aminoalkylacrylamide monomer as described is high in price, and hence is unfortunately disadvantageous with respect to the cost.

As shown in JP47-16542A and JP07-76623A, in an aqueous dispersion comprising a polyethylene resin, the larger the amino modification amount is, the easier the aqueous dispersion preparation is, but on the other hand, the excellent properties of the polyethylene resin are lost and hence the properties such as the water resistance and the solvent resistance in the coating film formed with the aqueous dispersion tend to be degraded. Conversely, the smaller the amino modification amount is, the more difficult the preparation of an aqueous dispersion is, but the properties of the polyethylene resin are maintained, and the improvement of the properties such as the water resistance and the solvent resistance can be expected. Accordingly, techniques to easily prepare aqueous dispersions from polyethylene resins having a small amino modification amount are demanded.

JP06-1921A describes a method for preparing a cationic aqueous dispersion in which method the ethylene-aminoalkylacrylamide copolymer having the same structure as in the copolymer described in JP07-76623A is prepared by amide bonding an ethylene-acrylic acid copolymer and a specific amino compound to each other, and then the resulting copolymer is quaternarized to prepare the cationic aqueous dispersion.

The polyethylene resin presented in JP06-1921A only includes the polyethylene resins each having a content of the aminoalkylacrylamide component of 4 mol% or more, and the properties such as the water resistance and the solvent resistance of the coating film prepared from the polyethylene resin are insufficient. An object of JP06-1921A is not to provide an aqueous dispersion prepared from a polyethylene resin having a small amino modification amount. Accordingly, JP06-1921A does not describe any technique capable of preparing an aqueous dispersion from a polyethylene resin having a small amino modification amount. The reactivity between the ethylene-acrylic acid copolymer and the specific amino compound is low, and hence a reaction time of ten and a few hours is required to perform the amide bonding. It is also necessary to add a catalyst. The dried coating film thus obtained contains the catalyst as remained therein, and hence the cohesiveness to the substrate tends to be degraded.

As described above, the cationic aqueous dispersions prepared from polyethylene resins which are satisfactory in the water resistance, the solvent resistance and the cohesiveness of the coating films prepared therefrom have never been found. The aqueous dispersions obtained from the ethylene-aminoalkyl acrylate copolymer and the ethylene-aminoalkylacrylamide copolymers, as shown in JP47-16542A, JP07-76623A and JP06-1921A, are not each sufficient with respect to the heat resistance of the coating film obtained therefrom. For example, these coating films tend to be poor in the hot adhesiveness at 70°C or higher, and are required to be imparted with heat resistance.

In the above-described specification of U.S Patent No. 34441515, JP47-16542A, JP07-76623A and JP06-1921A, no cationic aqueous dispersions prepared from polypropylene resins are described.

JP05-194660A discloses an olefin-maleimide copolymer having an amino modification amount of 1% or more and a quaternarized product thereof. However, no descriptions on the aqueous dispersions are made.

Summary of Invention

Technical Problem

A problem to be solved by the present invention is the provision of a polyolefin copolymer from which an aqueous dispersion stable in the acidic region can be obtained. Another problem to be solved by the present invention is the provision of an aqueous dispersion comprising the polyolefin copolymer, for obtaining a coating film (resin layer) excellent in cohesiveness, adhesiveness, water resistance, solvent resistance and heat resistance. Yet another problem to be solved by the present invention is the provision of a laminate in which a resin layer including the polyolefin copolymer is formed.

Solution to Problem

**[0019]** - The present inventors made a diligent study in order to solve the above-described problems, and consequently have found that a polyolefin copolymer including as a constituting component an N-substituted imide unit having a specific structure is excellent in water dispersibility and, even when the content of the aminoalkylimide unit is small, from such a polyolefin copolymer, an aqueous dispersion stable in the acidic region can be prepared. Additionally, the present inventors have found that the inclusion of the imide unit in the polyolefin copolymer imparts the heat resistance, and thus have reached the present invention.

Specifically, the gist of the present invention is the following (1) to (14).

(1) An aqueous dispersion in which a polyolefin copolymer is dispersed in an aqueous medium, the aqueous dispersion being characterized in that a number average particle size of the polyolefin copolymer in the aqueous dispersion is 1000 nm or less,
wherein the polyolefin copolymer comprises an olefin hydrocarbon unit and an N-substituted imide unit derived from an unsaturated carboxylic acid anhydride unit,
a content of the N-substituted imide unit derived from an unsaturated carboxylic acid anhydride unit in the polyolefin copolymer is 0.1 mol% or more and less than 10 mol %; and
an N-substituent of the N-substituted imide unit derived from an unsaturated carboxylic acid anhydride unit is a substituent represented by the following formula (I):

$$-(CH_2)_n NR^1R^2 \qquad (I)$$

wherein $R^1$ and $R^2$ each represent an alkyl group having 1 to 5 carbon atoms or a hydroxyalkyl group having 1 to 5 carbon atoms, and n represents an integer of 1 to 5.

(2) The aqueous dispersion according to (1), characterized in that:

the N-substituent of the N-substituted imide unit derived from an unsaturated carboxylic acid anhydride unit, of the polyolefin copolymer, in the aqueous dispersion is a substituent represented by the following formula (III) :

$$-(CH_2)_n N^+HR^1R^2 \cdot X^-. \qquad (III)$$

wherein $R^1$ and $R^2$ each represent an alkyl group having 1 to 5 carbon atoms or a hydroxyalkyl group having 1 to 5 carbon atoms, $X^-$ represents an anionic counterion and n represents an integer of 1 to 5.

(3) The aqueous dispersion according to (1) or (2), characterized in that the polyolefin copolymer in the aqueous dispersion comprises as a constituent component an unsaturated carboxylic acid unit and an acid number of the polyolefin copolymer is 0.1 to 50 mg KOH/g

(4) The aqueous dispersion according to any one of (1) to (3), characterized by containing an acid.

(5) The aqueous dispersion according to any one of (1) to (3), characterized by containing no nonvolatile aqueous dispersing aid.

(6) The aqueous dispersion according to any one of (1) to (3), characterized by containing a cross-linking agent having a functional group reacting with a carboxyl group.

(7) An aqueous dispersion in which a polyolefin copolymer is dispersed in an aqueous medium, the aqueous dispersion being characterized in that a number average particle size of the polyolefin copolymer in the aqueous dispersion is 1000 nm or less,
wherein the polyolefin copolymer comprises an olefin hydrocarbon unit and an N-substituted imide unit derived from an unsaturated carboxylic acid anhydride unit,
a content of the N-substituted imide unit derived from an unsaturated carboxylic acid anhydride unit in the polyolefin copolymer is 0.1 mol % or more and less than 10 mol %; and
an N-substituent of the N-substituted imide unit derived from an unsaturated carboxylic acid anhydride unit is a substituent represented by the following formula (II):

$$-(CH_2)_nN^+R^3R^4R^5 \cdot X^- \qquad (II)$$

wherein $R^3$ and $R^4$ each represent an alkyl group having 1 to 5 carbon atoms or a hydroxyalkyl group having 1 to 5 carbon atoms, $R^5$ represents a residue of a quaternarizing agent introduced by a quaternarization reaction, $X^-$ represents an anionic counterion and n represents an integer of 1 to 5.

(8) The aqueous dispersion according to (7), characterized in that the polyolefin copolymer in the aqueous dispersion comprises as a constituent component an unsaturated carboxylic acid unit and an acid number of the polyolefin copolymer is 0.1 to 50 mg KOH/g.

(9) The aqueous dispersion according to (7) or (8), characterized by containing no nonvolatile aqueous dispersing aid.

(10) The aqueous dispersion according to (7) or (8), characterized by containing a cross-linking agent having a functional group reacting with a carboxyl group.

(11) A laminate in which a resin layer is formed on at least part of a substrate, wherein the resin layer is obtained by coating at least part of the substrate with the aqueous dispersion according to any one of (1), (2), (3), (7) and (8).

(12) A method for manufacturing the aqueous dispersion of (1) or (2), characterized in that a polyolefin copolymer, an aqueous medium and an acid are stirred at 80 to 250°C,
wherein the polyolefin copolymer comprises an olefin hydrocarbon unit and an N-substituted imide unit derived from an unsaturated carboxylic acid anhydride unit,
a content of the N-substituted imide unit derived from an unsaturated carboxylic acid anhydride unit in the polyolefin copolymer is 0.1 mol% or more and less than 10 mol %; and
an N-substituent of the N-substituted imide unit derived from an unsaturated carboxylic acid anhydride unit is a substituent represented by the following formula (I):

$$-(CH_2)_nNR^1R^2 \qquad (I)$$

wherein $R^1$ and $R^2$ each represent an alkyl group having 1 to 5 carbon atoms or a hydroxyalkyl group having 1 to 5 carbon atoms, and n represents an integer of 1 to 5.

(13) A method for manufacturing the aqueous dispersion of (7), characterized in that a polyolefin copolymer and an aqueous medium are stirred at 80 to 250°C,
wherein the polyolefin copolymer comprises an olefin hydrocarbon unit and an N-substituted imide unit derived from an unsaturated carboxylic acid anhydride unit,
a content of the N-substifiuted imide unit derived from an unsaturated carboxylic acid anhydride unit in the polyolefin copolymer is 0.1 mol % or more and less than 10 mol %; and
an N-substituent of the N-substituted imide unit derived from an unsaturated carboxylic acid anhydride unit is a substituent represented by the following formula (II):

$$-(CH_2)_nN^+R^3R^4R^5 \cdot X^- \qquad (II)$$

wherein $R^3$ and $R^4$ each represent an alkyl group having 1 to 5 carbon atoms or a hydroxyalkyl group having 1 to 5 carbon atoms, $R^5$ represents a residue of a quaternarizing agent introduced by a quaternarization reaction, $X^-$ represents an anionic counterion and n represents an integer of 1 to 5.

(14) The method according to (12) or (13), characterized in that the polyolefin copolymer comprises as a constituent component an unsaturated carboxylic acid unit and an acid number of the polyolefin copolymer is 0.1 to 50 mg KOH/g.

Advantageous Effects of Invention

The polyolefin copolymer allows the aqueous dispersion of the present invention stable in the acidic region to be prepared therefrom even when the content of the N-substituted imide unit is small and no nonvolatile aqueous dispersing aid is contained therein. The aqueous dispersion of the present invention in which the polyolefin copolymer is dispersed in an aqueous medium can be applied to a wide variety of substrates, and the resulting coating films are excellent in cohesiveness, adhesiveness, water resistance and solvent resistance, and are also excellent in heat resistance. When the polyolefin copolymer includes an unsaturated carboxylic acid unit, the coating film obtained by applying the resulting aqueous dispersion is more excellent in cohesiveness and adhesiveness. By mixing a cross-linking agent having a functional group reacting with a carboxyl group in the molecule thereof, the resulting coating film is made more excellent in water resistance, solvent resistance and heat resistance. Further, the aqueous dispersion of the present invention is also excellent in environmental preservability because of an aqueous system.

Description of Embodiments

Hereinafter, the present invention is described in detail.

<Polyolefin Copolymer>

The polyolefin copolymer to be dispersed in an aqueous medium is the following polyolefin copolymer (P) or the following polyolefin copolymer (Q). From the viewpoint of facilitating the preparation of the aqueous dispersion of the present invention, the polyolefin copolymer is the "polyolefin copolymer (P)" having the substituent represented by the following formula (I), or the "polyolefin copolymer (Q)" having the substituent represented by the following formula (II), prepared by quaternarizing the polyolefin copolymer (P) with a quaternarizing agent.

The polyolefin copolymer (P) is a polyolefin copolymer including an olefin hydrocarbon unit and an N-substituted imide unit derived from an unsaturated carboxylic acid anhydride unit, wherein the content of the N-substituted imide unit derived from an unsaturated carboxylic acid anhydride unit is 0.1 mol% or more and less than 10 mol%, and the N-substituent of the N-substituted imide unit derived from an unsaturated carboxylic acid anhydride unit is represented by the following formula (I):

$$-(CH_2)_n NR^1R^2 \qquad (I)$$

In formula (I), $R^1$ and $R^2$ are each an alkyl group having 1 to 5 carbon atoms or a hydroxyalkyl group having 1 to 5 carbon atoms, and are each preferably an alkyl group having 1 or 2 carbon atoms. Also in formula (I), n is an integer of 1 to 5, preferably an integer of 2 to 4 and more preferably an integer of 2 or 3.

When the numbers of the carbon atoms in $R^1$ and $R^2$ and the integer represented by n are smaller than the above-described ranges, it is difficult to obtain the polyolefin copolymer. On the other hand, when these quantities are larger than the above-described ranges, the water resistance of the coating film obtained from the aqueous dispersion prepared from the polyolefin copolymer is degraded.

The polyolefin copolymer (Q) is a polyolefin copolymer in which either part or the whole of the substituents represented by formula (I) are quaternarized, and which includes an olefin hydrocarbon unit and an N-substituted imide unit derived from an unsaturated carboxylic acid anhydride unit, wherein the content of the N-substituted imide unit derived from an unsaturated carboxylic acid anhydride unit is 0.1 mol% or more and less than 10 mol%, and the N-substituent of the N-substituted imide unit derived from an unsaturated carboxylic acid anhydride unit is represented by the following formula (II):

$$-(CH_2)_n N^+R^3R^4R^5 \cdot X^- \qquad (II)$$

In formula (II), $R^3$ and $R^4$ are each an alkyl group having 1 to 5 carbon atoms or a hydroxyalkyl group having 1 to 5 carbon atoms, and are each preferably an alkyl group having 1 or 2 carbon atoms; $R^5$ is the residue of the quaternarizing agent introduced by the quaternarization reaction, and is preferably an alkyl group having 1 to 12 carbon atoms. Also in formula (II), n is an integer of 1 to 5, preferably an integer of 2 to 4 and more preferably an integer of 2 or 3; and $X^-$ represents an anionic counterion. The anionic counter ion as referred to herein means a composition capable of forming an ion pair with $N^+$ in the N-substituent.

When the numbers of the carbon atoms in $R^3$ and $R^4$ and the integer represented by n are smaller than the above-described ranges, it is difficult to obtain the polyolefin copolymer. On the other hand, when these quantities are larger than the above-described ranges, the water resistance of the coating film obtained from the aqueous dispersion prepared from the polyolefin copolymer is degraded.

Hereinafter, the "polyolefin copolymer" is the generic name for the "polyolefin copolymer (P)" and the "polyolefin copolymer (Q)."

The polyolefin copolymer includes as the constituent components thereof an olefin hydrocarbon unit and an N-substituted imide unit derived from an unsaturated carboxylic acid anhydride unit.

As the olefin hydrocarbon unit included as the constituent component of the polyolefin copolymer, olefin hydrocarbon units having 2 to 6 carbon atoms are preferable. Examples of such olefin hydrocarbon units include: alkenes such as ethylene, propylene, 1-butene, isobutene, 1-pentene, 4-methyl-1-pentene, 3-methyl-1-pentene and 1-hexene; and dienes such as butadiene and isoprene. The olefin hydrocarbon unit may also be composed of a plurality of these units. Among these, from the viewpoints of the easiness in manufacturing resins, cohesiveness to various materials and others, ethylene, propylene, 1-butene and isobutene are preferable, and ethylene and propylene are more preferable.

The content of the olefin hydrocarbon unit is preferably 65 to 99.9 mol%, more preferably 70 to 99.9 mol%, furthermore preferably 80 to 99.9 mol% and particularly preferably 85 to 99.9 mol%. When the content of the olefin hydrocarbon unit is less than 65 mol%, the water resistance and the solvent resistance of the coating film obtained from the aqueous dispersion prepared from the polyolefin copolymer tend to be degraded, and when the content of the olefin hydrocarbon unit exceeds 99.9 mol%, it is difficult to prepare an aqueous dispersion from the polyolefin copolymer.

Next, the N-substituted imide unit derived from an unsaturated carboxylic acid anhydride unit, included as a constituent component of the polyolefin copolymer, is described below.

The N-substituent of the polyolefin copolymer (P) is represented by formula (I). Specific examples of such an N-substituent include: an N,N-dimethylaminoethyl group, an N,N-dimethylaminopropyl group, an N,N-dimethylaminobutyl group, an N,N-diethylaminoethyl group, an N,N-diethylaminopropyl group and an N,N-diethylaminobutyl group. Preferable among these is the N,N-dimethylaminopropyl group.

The N-substituent of the polyolefin copolymer (Q) is represented by formula (II). The N-substituent of the polyolefin copolymer (Q) is the substituents obtained by quaternarizing with quaternarizing agents the substituents represented by formula (I), listed above for the polyolefin copolymer (P).

Examples of the unsaturated carboxylic acid anhydride to give the N-substituted imide unit, of the polyolefin copolymer, derived from an unsaturated carboxylic acid anhydride unit include maleic anhydride and itaconic anhydride; preferable of these is maleic anhydride because of being easily copolymerized with the olefin hydrocarbon unit.

In the case of the polyolefin copolymer (P), specific examples of the N-substituted imide unit derived from an unsaturated carboxylic acid anhydride unit include N,N-dimethylaminoethyl maleimide, N,N-dimethylaminopropyl maleimide, N,N-dimethylaminobutyl maleimide, N,N-diethylaminoethyl maleimide, N,N-diethylaminopropyl maleimide and N,N-diethylaminobutyl maleimide. Two or more of these may also be copolymerized. On the other hand, in the case of the polyolefin copolymer (Q), specific examples of the N-substituted imide unit include the N-substituted imide units obtained by quaternarizing with quaternarizing agents the N-substituted imide units listed above for the polyolefin copolymer (P). Two or more of such N-substituted imide units for the polyolefin copolymer (Q) may also be copolymerized.

The content of the N-substituted imide unit derived from an unsaturated carboxylic acid anhydride unit in the polyolefin copolymer is required to be 0.1 mol% or more and less than 10 mol%, and is preferably 0.1 mol% or more and less than 5 mol%, more preferably 0.1 mol% or more and less than 4 mol%, furthermore preferably 0.1 mol% or more and less than 3 mol%, particularly preferably 0.1 mol% or more and less than 2 mol% and most preferably 0.1 mol% or more and less than 1 mol%.

In the present invention, with the increase of the content of the N-substituted imide unit derived from an unsaturated carboxylic acid anhydride unit in the polyolefin copolymer, the effect of improving the heat resistance of the coating film obtained from the aqueous dispersion prepared from the polyolefin copolymer tends to be enhanced. On the other hand, with the decrease of the content of the concerned N-substituted imide unit, the effect of improving the heat resistance tends to be degraded. The detailed mechanism of the heat resistance change depending on the content of the N-substituted imide unit derived from an unsaturated carboxylic acid anhydride unit is not clear; however, it may be assumed that the polyolefin copolymer is made rigid by the inclusion of the imide ring structure in the main chain thereof to impart heat resistance thereto.

When the content of the N-substituted imide unit derived from an unsaturated carboxylic acid anhydride unit is less than 0.1 mol%, the effect of improving the heat resistance is insufficient, and it is difficult to prepare an aqueous dispersion from the polyolefin copolymer. On the other hand, when the content of the N-substituted imide unit derived from an unsaturated carboxylic acid anhydride unit is 10 mol% or more, the heat resistance and the solvent resistance of the coating film obtained from the aqueous dispersion prepared from the polyolefin copolymer tend to be degraded.

The polyolefin copolymer preferably further includes as a constituent component an unsaturated carboxylic acid unit. By including the unsaturated carboxylic acid unit, the coating film obtained from the aqueous dispersion prepared from the polyolefin copolymer is made to be more excellent in cohesiveness and adhesiveness. Further, such an unsaturated carboxylic acid unit has a functional group in the structure thereof, and hence is excellent in the capabilities such as the reactivity with a cross-linking agent, and is advantageously capable of easily forming a cross-linked structure; accordingly, the resulting coating film is more excellent in water resistance, solvent resistance and heat resistance.

Examples of the unsaturated carboxylic acid unit include maleic anhydride, maleic acid, itaconic anhydride, itaconic acid, acrylic acid, methacrylic acid, fumaric acid and crotonic acid. Preferable among these are maleic anhydride, maleic acid, itaconic anhydride and itaconic acid, and particularly preferable among these are maleic anhydride and maleic acid.

The content of the unsaturated carboxylic acid unit in the polyolefin copolymer can be determined by measuring the acid number of the polyolefin copolymer. In the present invention, the acid number (mg KOH/g) of the polyolefin copolymer is determined as follows: the polyolefin copolymer is dissolved in a mixed tetrahydrofuran/toluene/water = 20/4.8/0.2 (mass ratio) solvent, the titration is performed with KOH by using cresol red as an indicator, and the acid number is determined from the amount of KOH consumed until the time point where the color of the solution turns purple and the purple color is unchanged for 20 seconds. The thus determined acid number of the polyolefin copolymer is preferably 0.1 to 50 mg KOH/g, more preferably 0.2 to 40 mg KOH/g, furthermore preferably 0.5 to 30 mg KOH/g and particularly preferably 1.0 to 20 mg KOH/g. When the acid number of the polyolefin copolymer exceeds 50 mg KOH/g, the preparation of an aqueous dispersion from the polyolefin copolymer tends to be difficult. On the other hand, when the acid number of the polyolefin copolymer is less than 0.1 mg KOH/g, the content of the unsaturated carboxylic acid is too small, and hence the effect of improving the adhesiveness and cohesiveness of the coating film obtained from the aqueous dispersion prepared from the polyolefin copolymer tends to be degraded. Further, the formation of the cross-linked structure when a cross-linking agent is added to the aqueous dispersion tends to be difficult.

The polyolefin copolymer may be a polyolefin copolymer including monomer units (other monomer units) other than the above-described olefin hydrocarbon unit, N-substituted imide unit derived from an unsaturated carboxylic acid anhydride unit and unsaturated carboxylic acid unit.

Examples of such other monomer units include: (meth)acrylic acid esters such as methyl (meth)acrylate, ethyl (meth)acrylate, propyl (meth)acrylate and butyl (meth)acrylate; maleic acid esters such as dimethyl maleate, diethyl maleate and dibutyl maleate; vinyl esters such as vinyl formate, vinyl acetate and vinyl propionate; and monomer units such as vinyl alcohols obtained by saponifying vinyl esters with basic compounds and others.

The polyolefin copolymer preferably includes the (meth)acrylic acid ester unit among these monomer units. The inclusion of this unit more improves the cohesiveness to the substrate and the adhesiveness of the coating film obtained from the aqueous dispersion prepared from the polyolefin copolymer.

The content of the (meth)acrylic acid ester unit is preferably 0.1 to 25 mol%, more preferably 0.1 to 20 mol% and furthermore preferably 1 to 15 mol%. When the content exceeds 25 mol%, unpreferably the strength of the coating film obtained from the aqueous dispersion prepared from the polyolefin copolymer tends to be degraded. On the other hand, when the content is less than 0.1 mol%, the improvement of the above-described effect is made poor.

The molecular weight of the polyolefin copolymer is, in terms of the mass average molecular weight, 5000 to 500000, more preferably 10000 to 200000, furthermore preferably 15000 to 100000 and particularly preferably 20000 to 80000. When the mass average molecular weight is less than 5000, the cohesiveness, the adhesiveness and the solvent resistance of the coating film obtained from the aqueous dispersion prepared from the polyolefin copolymer tends to be degraded. When the mass average molecular weight exceeds 500000, the preparation of the aqueous dispersion from the polyolefin copolymer tends to be difficult.

In general, polyolefin copolymers are sparingly soluble in solvents, and hence the molecular weight measurement is difficult as the case may be. In such cases, the melt flow rate value representing the fluidity of the molten resin is adopted as a measure of the molecular weight.

The melt flow rate value (according to JIS K7210:1999) of the polyolefin copolymer is preferably 0.1 to 2000 g/10 min, more preferably 0.5 to 1000 g/10 min, furthermore preferably 1 to 500 g/10 min and particularly preferably 2 to 200 g/10 min. When the melt flow rate value exceeds 2000 g/10 min, the cohesiveness, the adhesiveness and the solvent resistance of the coating film obtained from the aqueous dispersion prepared from the polyolefin copolymer tend to be degraded. When the melt flow rate value less than 0.1 g/10 min, the preparation of an aqueous dispersion from the polyolefin copolymer tends to be difficult.

The polyolefin copolymer (Q) is a polyolefin copolymer obtained, as described above, by quaternarizing with a quaternarizing agent the N-substituent of the polyolefin copolymer (P). The quaternarizing agent is only required to be an agent capable of quaternarizing the substituent represented by formula (I) to be converted into the substituent represented by formula (II). Examples of the quaternarizing agent include: dialkyl sulfates such as dimethyl sulfate and diethyl sulfate; alkyl halides such as methyl chloride, ethyl chloride, benzyl chloride, methyl bromide, ethyl bromide, benzyl bromide, methyl iodide, ethyl iodide and benzyl iodide; epoxies such as ethylene oxide, propylene oxide, butylene oxide, styrene oxide, epichlorohydrin, allyl glycidyl ether, butyl glycidyl ether, 2-ethylhexyl glycidyl ether and phenyl glycidyl ether; and methyl alkylsulfonates or methyl arylsulfonates such as methyl methanesulfonate and methyl paratoluenesulfonate. Preferable among these are dialkyl sulfates and alkyl halides, because of the excellent quaternarization reactivity thereof, and more preferable are dialkyl sulfates. These quaternarizing agents may be used each alone or in combinations of two or more thereof.

The above-described polyolefin copolymer has excellent processing properties, excellent flexibility properties and the like, and can be used in wide applications as resins for processing into films, resins for processing into fibers, resins for processing into nonwoven fabrics, adhesives, resin reforming agents and the like. However, the most characteristic property of the polyolefin copolymer is the excellent aqueous dispersibility, and the polyolefin copolymer is used as a cationic aqueous dispersion stable in the acidic region with the aid of the below-described aqueous dispersion preparation method.

The polyolefin copolymer has an excellent aqueous dispersibility. Accordingly, it is not necessary to chlorinate the polyolefin copolymer for the purpose of improving the solubility or the aqueous dispersibility. From the viewpoint of the environmental preservation, it is preferable not to halogenate the polyolefin copolymer.

<Manufacturing Method for Polyolefin Copolymer>

Next, a manufacturing method for the polyolefin copolymer (P) is described. Examples of the manufacturing method for the polyolefin copolymer (P) include: (A) a method in which an unsaturated carboxylic acid anhydride and a primary amine having the substituent represented by formula (I) are allowed to imidize with each other to beforehand prepare an N-substituted unsaturated carboxylic acid imide, and the N-substituted unsaturated carboxylic acid imide and an olefin hydrocarbon, and where necessary, an unsaturated carboxylic acid and other monomers are copolymerized; (B) a method in which the beforehand prepared N-substituted unsaturated carboxylic acid imide is grafted to a polyolefin resin or an olefin copolymer; and (C) a method in which a copolymer, including as the constituent components thereof an olefin hydrocarbon unit and an unsaturated carboxylic acid anhydride unit, and the primary amine having a substituent represented by formula (I) are subjected to an imidization reaction.

Preferable among these method is the method of (C), in which the copolymer, as a raw material, including as the constituent components thereof the olefin hydrocarbon unit and the unsaturated carboxylic acid anhydride unit can be commercially available at low prices as olefin-carboxylic acid anhydride copolymers and the like, and moreover, the copolymer can be subjected to an imidization reaction without using any specific apparatus, and thus the polyolefin copolymer excellent in aqueous dispersibility can be easily obtained.

Hereinafter, the method of (C) is described in detail.

In the method of (C), a copolymer (hereinafter, abbreviated as the anhydride-containing copolymer) including as the constituent components thereof an olefin hydrocarbon unit and an unsaturated carboxylic acid anhydride unit is used as a raw material as described above. First, the anhydride-containing copolymer to be used as a raw material is described below.

The types and the contents of the olefin hydrocarbon unit and the unsaturated carboxylic acid anhydride unit constituting the anhydride-containing copolymer are only required to satisfy the composition of the polyolefin copolymer obtained by subjecting the anhydride-containing copolymer to an imidization reaction. The anhydride-containing copolymer may be a copolymer including monomer units (other monomer units) other than the olefin hydrocarbon unit and the unsaturated carboxylic acid anhydride unit.

Specifically, it is preferable to use, as the olefin hydrocarbon unit constituting the anhydride-containing copolymer, the same olefin hydrocarbon unit as the above-described olefin hydrocarbon unit in the polyolefin copolymer. The content of the olefin hydrocarbon unit in the anhydride-containing copolymer is preferably 65 to 99.9 mol%, more preferably 70 to 99.9 mol%, furthermore preferably 80 to 99.9 mol% and particularly preferably 85 to 99.9 mol%. When the content of the olefin hydrocarbon unit is less than 65 mol%, the water resistance and the solvent resistance of the coating film, obtained from the aqueous dispersion prepared from the polyolefin copolymer obtained after the imidization of the anhydride-containing copolymer, tend to be degraded, and when the content exceeds 99.9 mol%, the preparation of an aqueous dispersion from the obtained polyolefin copolymer is difficult.

Examples of the unsaturated carboxylic acid anhydride unit constituting the anhydride-containing copolymer include maleic anhydride and itaconic anhydride. Preferable of these is maleic anhydride because of being easily copolymerized with the olefin hydrocarbon unit.

The content of the unsaturated carboxylic acid anhydride unit in the anhydride-containing copolymer is preferably 0.1 mol% or more and less than 10 mol%, in particular preferably 0.1 mol% or more and less than 5 mol%, more preferably 0.1 mol% or more and less than 4 mol%, furthermore preferably 0.1 mol% or more and less than 3 mol%, particularly preferably 0.1 mol% or more and less than 1 mol% and most preferably 0.1 mol% or more and less than 1 mol%. When the content of the unsaturated carboxylic acid anhydride in the anhydride-containing copolymer is less than 0.1 mol%, the effect of improving the heat resistance of the coating film, obtained from the aqueous dispersion prepared from the polyolefin copolymer obtained after the imidization of the anhydride-containing copolymer, is insufficient, and the preparation of an aqueous dispersion from the polyolefin copolymer is difficult. On the other hand, when the content of the unsaturated carboxylic acid anhydride in the anhydride-containing copolymer is 10 mol% or more, the water resistance and the solvent resistance of the coating film, obtained from the aqueous dispersion prepared from the polyolefin copolymer obtained after the imidization of the anhydride-containing copolymer, tend to be degraded.

Examples of the monomer units other than the olefin hydrocarbon unit and the unsaturated carboxylic acid anhydride unit constituting the anhydride-containing copolymer include the following monomer units: (meth)acrylic acid esters such as methyl (meth)acrylate, ethyl (meth)acrylate, propyl (meth)acrylate and butyl (meth)acrylate; maleic acid esters such as dimethyl maleate, diethyl maleate and dibutyl maleate; vinyl esters such as vinyl formate, vinyl acetate and vinyl propionate, and vinyl alcohols obtained by saponifying vinyl esters with basic compounds; and unsaturated carboxylic acids such as acrylic acid, methacrylic acid, maleic acid and itaconic acid.

The anhydride-containing copolymer preferably includes the (meth)acrylic acid ester unit among these monomer units. The inclusion of this unit more improves the cohesiveness to the substrate and the adhesiveness of the coating film obtained from the aqueous dispersion prepared from the polyolefin copolymer.

The content of the (meth)acrylic acid eater unit in the anhydride-containing copolymer is preferably 0.1 to 25 mol%, more preferably 0.1 to 20 mol% and furthermore preferably 1 to 15 mol%. When the content exceeds 25 mol%, unpreferably the strength of the polyolefin copolymer obtained from the anhydride-containing copolymer tends to be degraded. On the other hand, when the content is less than 0.1 mol%, the improvement of the above-described effects is made poor.

The molecular weight of the anhydride-containing copolymer is not particularly limited, and is only required to lead to the result that the polyolefin copolymer obtained after the imidization reaction has the above-described preferable molecular weight. Specifically, the molecular weight of the anhydride-containing copolymer is, in terms of the mass average molecular weight, preferably 5000 or more, and in terms of the melt flow rate value (according to JIS K7210:1999), preferably 0.1 g/10 min or more, more preferably 0.1 to 2000 g/10 min, furthermore preferably 0.5 to 1000 g/10 min, particularly preferably 1 to 500 g/10 min and most preferably 2 to 200 g/10 min.

The type of the copolymerization of the anhydride-containing copolymer is not particularly limited; examples of such a type include random copolymerization, block copolymerization and graft copolymerization (graft modification).

As the polymerization method of the anhydride-containing copolymer, heretofore known methods can be adopted. Examples of such polymerization methods include: a high pressure radical polymerization method in which together with a polymerization initiator such as oxygen, an organic peroxide or a diazo compound, polymerization is performed under the conditions that the temperature is 100 to 300°C and the pressure is 50 to 400 MPa; and a method in which an unsaturated carboxylic acid anhydride monomer is grafted to a polyolefin resin or a polyolefin copolymer. Preferable of these methods is the high pressure radical polymerization method because of the easiness in designing the contents of the individual monomer units in the copolymer.

Specific examples of the anhydride-containing copolymer include: ethylene-maleic anhydride copolymer; propylene-maleic anhydride copolymer; ethylene-maleic anhydride graft copolymer; ethylene-(meth)acrylic acid ester-maleic anhydride ternary copolymers such as ethylene-methyl (meth)acrylate-maleic anhydride ternary copolymer, ethylene-ethyl (meth)acrylate-maleic anhydride ternary copolymer, ethylene-propyl (meth)acrylate-maleic anhydride ternary copolymer and ethylene-butyl (meth)acrylate-maleic anhydride ternary copolymer; propylene-maleic anhydride graft copolymer; propylene-butene-maleic anhydride graft copolymer; and propylene-butene-ethylene-maleic anhydride graft copolymer.

Because of the further improvement of the cohesiveness to the substrate and the adhesiveness of the coating film obtained from the aqueous dispersion prepared from the polyolefin copolymer obtained after the imidization of the anhydride-containing copolymer, preferable as the anhydride-containing copolymer among these are the ethylene-(meth)acrylic acid ester-maleic anhydride ternary copolymers such as ethylene-methyl (meth)acrylate-maleic anhydride ternary copolymer, ethylene-ethyl (meth)acrylate-maleic anhydride ternary copolymer, ethylene-propyl (meth)acrylate-maleic anhydride ternary copolymer and ethylene-butyl (meth)acrylate-maleic anhydride ternary copolymer.

As these anhydride-containing copolymers, commercially available products can also be suitably used; examples of such products widely available in the market include: "Bondine," "Lotader" and "Orevac" manufactured by Arkema Inc.; "Rexpearl ET" and "Adtex" manufactured by Japan Polyethylene Corp.; "Modiper" manufactured by NOF Corp.; "Umex" manufactured by Sanyo Chemical Industries, Ltd.; "Adomer" manufactured by Mitsui Chemicals, Inc.; and "Auroren" manufactured by Nippon Paper Chemicals Co., Ltd.

In the above-described manufacturing method of (C), the polyolefin copolymer (P) is obtained by subjecting to an imidization reaction the above-described anhydride-containing copolymer and an amino compound (hereinafter, referred to as the amino compound as the case may be) represented by the following formula (IV). The amino compound represented by the following formula (IV) is a primary amine having a substituent represented by formula (I) :

$$H_2N\text{-}(CH_2)_nNR^1R^2 \qquad (IV)$$

In formula (IV), $R^1$ and $R^2$ are each an alkyl group having 1 to 5 carbon atoms or a hydroxyalkyl group having 1 to 5 carbon atoms, and are each preferably an alkyl group having 1 or 2 carbon atoms. When $R^1$ and $R^2$ are each an alkyl or hydroxyalkyl group having 6 or more carbon atoms, the boiling point of the amino compound is high, unreacted substances tend to remain in the obtained polyolefin copolymer, and the water resistance of the coating film obtained from the aqueous dispersion prepared from the polyolefin copolymer is degraded. When either or both of $R^1$ and $R^2$ are hydrogen atoms, both of the amines in the amino compound molecule react with the carboxylic acid anhydride at the time of the imidization reaction, and thus the preparation of the aqueous dispersion is made difficult.

Also, in formula (IV), n is an integer of 1 to 5, preferably an integer of 2 to 4 and more preferably an integer of 2 or 3. When n is 0, there is a risk of explosion during handling. When n is 6 or more, the boiling point of the amino compound is high, unreacted substances tend to remain in the obtained polyolefin copolymer, and the water resistance of the coating film obtained from the aqueous dispersion prepared from the polyolefin copolymer is degraded.

Such an amino compound as described above enables to produce the N-substituted unsaturated carboxylic acid imide having the substituent represented by formula (I) through the imide bond formation between the primary amine in the molecule of the amino compound and the carboxylic acid anhydride of the anhydride-containing copolymer.

Examples of the amino compound represented by formula (IV) include N,N-dialkylaminoalkylamines. Preferable among these are N,N-dimethylaminoethylamine, N,N-dimethylaminopropylamine, N,N-dimethylaminobutylamine, N,N-diethylaminoethylamine, N,N-diethylaminopropylamine, N,N-diethylaminobutylamine and the like: more preferable is N,N-dimethylaminopropylamine.

Next, the imidization reaction is described.

The polyolefin copolymer (P) can be manufactured by mixing the anhydride-containing copolymer and the amino compound and by heating the resulting mixture to allow the imidization reaction to proceed. The reaction temperature of the imidization is preferably 50 to 300°C, more preferably 70 to 250°C, furthermore preferably 90 to 200°C and particularly preferably 100 to 170°C. When the reaction temperature is lower than 50°C, the imidization reaction rate is sometimes too slow. On the other hand, the temperatures exceeding 300°C are not required for the imidization reaction, and sometimes offer a cause for coloration. In the imidization reaction, it is preferable to mix together the both ingredients by an operation such as stirring. The time required for the imidization reaction is not particularly limited, and is, for example, preferably 30 seconds to 1 hour and more preferably 1 to 45 minutes. The reactivity of the imidization reaction is high, and hence usually no addition of a catalyst to promote the reaction is needed.

When the anhydride-containing copolymer and the amino compound are subjected to an imidization reaction, it is preferable that the unsaturated carboxylic acid anhydride unit included in the anhydride-containing copolymer is not all imidized, but is made to partially remain as the unsaturated carboxylic acid unit. By not imidizing all the unsaturated carboxylic acid anhydride unit, a polyolefin copolymer that includes an unsaturated carboxylic acid unit can be obtained. The coating film obtained from the aqueous dispersion prepared from such a polyolefin copolymer is more excellent in cohesiveness and adhesiveness. In such a polyolefin copolymer, a cross-linked structure can be easily formed by adding a cross-linking agent, and hence the obtained coating film is more excellent in water resistance, solvent resistance and heat resistance. The content of the unsaturated carboxylic acid unit that is included without being imidized in the polyolefin copolymer can be regulated as described below, for example, by the addition amount of the amino compound in the imidization reaction.

The addition amount of the amino compound in the imidization reaction may be approximately in a range from 0.2- to 10-fold equivalent moles in relation to the number of moles of the unsaturated carboxylic acid anhydride unit in the anhydride-containing copolymer. From the viewpoint of not imidizing all the included unsaturated carboxylic acid anhydride unit and making the included unsaturated carboxylic acid anhydride unit partially remain as the unsaturated carboxylic acid anhydride unit, the addition amount of the amino compound in the imidization reaction is preferably 0.3- to 2-fold equivalent moles, more preferably 0.4- to 1.5-fold equivalent moles, furthermore preferably 0.4- to 1-fold equivalent moles, particularly preferably 0.4- to 0.9-fold equivalent moles and most preferably 0.4- to 0.8-fold equivalent moles.

Next, specific methods of the imidization reaction are described. However, the imidization reaction is not limited to these methods.

The imidization reaction can be performed with heretofore known apparatuses and methods. Examples of such methods include: a method in which the anhydride-containing copolymer and the amino compound are heated and stirred in a reaction vessel; and a method in which the anhydride-containing copolymer and the amino compound are continuously heated and stirred with an extruder.

Examples of the method in which the anhydride-containing copolymer and the amino compound are heated and stirred in a reaction vessel include a method which uses a reaction vessel equipped with a stirring blade and, where necessary, a condenser. For the imidization reaction, if the reaction vessel is a pressure-proof vessel, the reaction vessel may be hermetically sealed, and if the reaction vessel is not a pressure-proof vessel, the vapor generated by heating may be refluxed into the reaction vessel through the condenser. The anhydride-containing copolymer and the amino compound, which are raw materials, may be placed together at a time in the reaction vessel before the reaction, or alternatively, only the anhydride-containing copolymer may be beforehand placed in the reaction vessel, and after heating, the amino compound may be placed in the reaction vessel and the resulting mixture may be stirred.

The shape of the stirring blade is not limited. The stirring speed is also not limited; although the stirring speed depends on the volume of the reaction vessel and the shape of the stirring blade and cannot be unconditionally specified, usually no high speed rotation exceeding 200 rpm is required, and hence in general the stirring speed is 200 rpm or less. The stirring may also be performed intermittently. In the imidization reaction, for the purpose of suppressing the oxidation of the polyolefin copolymer, the gas in the reaction vessel may be replaced with nitrogen gas.

Additionally, in the imidization reaction, it is preferable to melt the anhydride-containing copolymer by heating to 50 to 300°C the anhydride-containing copolymer and the amino compound. Also, when the melt viscosity of the anhydride-containing copolymer is high to exert a large load to the stirrer or to result in unsatisfactory stirring efficiency, a solvent may be added.

Although the solvent is preferably a solvent to dissolve the anhydride-containing copolymer from the viewpoint of improving the stirring effect, the solvent may be a solvent such as water having no capability of dissolving the anhydride-containing copolymer. However, unpreferable as the solvent are nonvolatile solvents, high boiling point solvents, and the solvents having the reactivity with the anhydride-containing copolymer or the amino compound. The boiling point of the solvent is preferably 150°C or lower for the purpose of facilitating the removal of the solvent.

Preferable specific examples of the solvent include toluene and xylene. The feed amount of the solvent may be appropriately selected depending on the circumstances involved; when the amount of the solvent is approximately 100 parts by mass in relation to 100 parts by mass of the resin amount, the stirring efficiency can be sufficiently improved.

After the imidization reaction has been performed as described above, it is preferable to provide a step of removing the unreacted amino compound and the solvent in the reaction vessel. As the method for removing the unreacted amino compound and the solvent, preferable is a method in which the interior of the reaction vessel is heated and stirred, and reduced in pressure, where necessary, and the generated vapor is distilled off outside the reaction vessel through the condenser. In this case, it is preferable to set the temperature inside the reaction vessel at a temperature rather higher than the boiling points of the amino compound and the solvent.

When the obtained polyolefin copolymer is dispensed from the reaction vessel after the imidization reaction, the polyolefin copolymer is preferably converted into 10-mm or smaller pellets.

When the imidization reaction is performed with an extruder, it is preferable to continuously heat and stir with the extruder the anhydride-containing copolymer and the amino compound. It is preferable to use as such an extruder an extruder equipped with a hopper and a liquid injection device. The extruder is preferably a double screw extruder.

The method for performing the imidization reaction with an extruder is described hereinafter. Specifically, to the extruder heated so as for the temperature of the resin to be 50 to 300°C, the anhydride-containing copolymer is fed quantitatively from the hopper, and further, the amino compound is fed quantitatively from the liquid injection device disposed at a position midway along the barrel, and thus the imidization reaction can be performed. The rotation speed of the screw is not limited, and usually may be in a range from 20 to 200 rpm.

After the imidization reaction has been performed in this way in the extruder, similarly to the above-described case where the imidization reaction is performed with a reaction vessel, it is preferable to set a step of removing the unreacted amino compound. Preferable as the method for removing the unreacted amino compound is a method in which from a vent provided in the rear half of the barrel of the extruder, the interior of the extruder is reduced in pressure, and the generated vapor is distilled off outside the extruder through a condenser.

The polyolefin copolymer obtained by the above-described method may also be provided, where necessary, with a step of further removing the unreacted amino compound. Examples of a method for removing the unreacted amino compound include: a method in which the obtained polyolefin copolymer is heated and dried; a method in which the obtained polyolefin copolymer is heated and vacuum dried; and a method in which the obtained polyolefin copolymer is extracted.

Next, the manufacturing method for the polyolefin copolymer (Q) is described. The polyolefin copolymer (Q) is, as described above, a polyolefin copolymer in which either part or the whole of the substituents represented by formula (I) of the polyolefin copolymer (P) are quaternarized with the above-described quaternarizing agent. The addition amount of the quaternarizing agent is preferably 0.5- to 5-fold equivalent moles, more preferably 0.6- to 2-fold equivalent moles, furthermore preferably 0.8- to 1.5-fold equivalent moles and particularly preferably 0.9- to 1.0-fold equivalent moles, in relation to the number of moles of the substituent represented by formula (I), contained in the polyolefin copolymer (P). When the content of the quaternarizing agent less than 0.5-fold equivalent moles, the preparation of an aqueous dispersion from the obtained polyolefin copolymer (Q) is difficult, and when the content of the quaternarizing agent exceeds 5-fold equivalent moles, no further change occurs in the addition effect.

As the quaternarization method using a quaternarizing agent, heretofore known methods can be used; examples of such methods include: a method in which the polyolefin copolymer (P) and the quaternarizing agent are heated and stirred in a reaction vessel; and a method in which the polyolefin copolymer (P) and the quaternarizing agent are continuously heated and stirred with an extruder. The reaction temperature required for the quaternarization is usually in a range from 30 to 200°C, and the required reaction time is usually 1 minute or more. By mixing the polyolefin copolymer (P) and the quaternarizing agent under such reaction conditions, either part or the whole of the substituents represented by formula (I) are quaternarized, and thus the polyolefin copolymer (Q) having the substituent represented by formula (II) can be obtained.

<Aqueous Dispersion>

Next, the aqueous dispersion of the present invention is described. The aqueous dispersion of the present invention is the aqueous dispersion (M) in which the polyolefin copolymer (P) is dispersed in an aqueous medium or the aqueous dispersion (N) in which the polyolefin copolymer (Q) is dispersed in an aqueous medium.

In this connection, the aqueous medium in the present invention means water or a mixed liquid composed of water and an organic solvent. In the present invention, aqueous dispersions are prepared by using aqueous media, and hence the environmental effect and the safety for workers and the safety for the work environment can be improved.

First, the aqueous dispersion (M) is described. The aqueous dispersion (M) preferably contains an acid. In the polyolefin copolymer (P) included in the aqueous dispersion (M) of the present invention, either part or the whole of the substituents represented by formula (I) are preferably neutralized with an acid. The neutralization of the substituents produces amino cations in the polyolefin copolymer, the electric repulsive force between the amino cations microparticulates the polyolefin copolymer and disintegrates the aggregation between the microparticulates. Consequently, the aqueous dispersion is imparted with stability, and thus can be converted into an aqueous dispersion stable in the acidic region.

In other words, the polyolefin copolymer (P) can be dispersed in the aqueous medium (M) by converting, into the substituent represented by the following formula (III), the N-substituent in the N-substituted imide unit derived from the unsaturated carboxylic acid anhydride in the polyolefin copolymer (P) of the present invention:

$$-(CH_2)_n N^+ HR^1 R^2 \cdot X^- \qquad (III)$$

In formula (III), $R^1$ and $R^2$ are each an alkyl group having 1 to 5 carbon atoms or a hydroxyalkyl group having 1 to 5 carbon atoms, and are each preferably an alkyl group having 1 or 2 carbon atoms. Also in formula (III), n is an integer of 1 to 5, preferably an integer of 2 to 4 and more preferably an integer of 2 or 3, and $X^-$ represents an anionic counterion.

When the numbers of the carbon atoms in $R^1$ and $R^2$ and the integer represented by n are smaller than the above-described ranges, it is difficult to obtain the polyolefin copolymer. On the other hand, when these quantities are larger than the above-described ranges, the water resistance of the coating film obtained from the aqueous dispersion prepared from the polyolefin copolymer is degraded.

Examples of the substituent represented by formula (III) include: the substituents obtained by neutralizing an N,N-dimethylaminoethyl group, an N,N-dimethylaminopropyl group, an N,N-dimethylaminobutyl group, an N,N-diethylaminoethyl group, an N,N-diethylaminopropyl group and an N,N-diethylaminobutyl group. Preferable among these is the substituent obtained by neutralizing the N,N-dimethylaminopropyl group.

The content of the acid in the aqueous dispersion (M) is preferably 0.5- to 5-fold equivalent moles, more preferably 0.8- to 3-fold equivalent moles and furthermore preferably 1- to 2.5-fold equivalent moles, in relation to the number of moles of the substituent represented by formula (III) contained in the polyolefin copolymer (P). When the acid content is less than 0.5-fold equivalent moles, the form of the aqueous dispersion sometimes cannot be stably maintained, and when the acid content exceeds 5-fold equivalent moles, the aqueous dispersion is sometimes colored, and the drying time for obtaining a coating film is sometimes prolonged.

The acid used for the neutralization is an acid capable of neutralizing the substituent represented by formula (I) and preferably having an acid dissociation constant (pKa) of -9 to 8, more preferably a pKa of -9 to 7, furthermore preferably a pKa value of -5 to 6 and particularly preferably a pKa of 0 to 5. When the acid dissociation constant (pKa) exceeds 8, the neutralization of the substituent is difficult, and the preparation of aqueous dispersion from the polyolefin copolymer tends to be difficult. When the acid dissociation constant is less than -9, the workability in obtaining an aqueous dispersion tends to be difficult.

Additionally, the acid is preferably volatile. Specifically, the boiling point of the acid is preferably 20 to 250°C, more preferably 30 to 200°C, furthermore preferably 50 to 150°C and particularly preferably 50 to 120°C. When the acid is nonvolatile, the acid remains in the coating film obtained from the aqueous dispersion prepared from the polyolefin copolymer, and the cohesiveness and the water resistance tend to be degraded. When the boiling point of the acid is too low, the proportion of the acid evaporated in the preparation of an aqueous dispersion is large and hence the efficiency of the neutralization is sometimes not increased.

Specific examples of such an acid as described above include: organic acids such as formic acid, acetic acid, propionic acid, butyric acid, valeric acid, lactic acid and citric acid; and inorganic acids such as hydrochloric acid, sulfuric acid, phosphoric acid and nitric acid. These acids may be used each alone or in combinations of two or more thereof. Preferable among these are organic acids because of being excellent in the neutralization of the substituent, and preferable among the organic acid are formic acid and acetic acid.

Next, the aqueous dispersion (N) of the present invention is described. The aqueous dispersion (N) of the present invention is an aqueous dispersion in which the polyolefin copolymer (Q) is dispersed in an aqueous medium.

The polyolefin copolymer (Q) already has amino cations because the substituents contained therein, represented by formula (II), are quaternarized, and hence even when the polyolefin copolymer (Q) contains no acid, a dispersion stable in the acidic region can be obtained from the polyolefin copolymer (Q).

When the aqueous dispersion (M) and the aqueous dispersion (N) are compared with each other, the aqueous dispersion (N) is easy in the preparation of the aqueous dispersion and hence is easy to produce because the polyolefin copolymer (Q) included in the aqueous dispersion (N) has quaternarized substituents. However, because the aqueous dispersion (N) is an aqueous dispersion in which the polyolefin copolymer (Q) having the quaternarized substituents is dispersed, the polyolefin copolymer (N) tends to be poor in the water resistance of the coating film obtained from the aqueous dispersion. Accordingly, from the viewpoint of the performances of the coating film obtained from the aqueous dispersion prepared from the polyolefin copolymer, the aqueous dispersion (M) in which the polyolefin copolymer (P) is dispersed is preferable.

Hereinafter, the "aqueous dispersion" is the generic name for the "aqueous dispersion (N)" and the "aqueous dispersion (M)."

The number average particle size of the polyolefin copolymer in the aqueous dispersion of the present invention is 1000 nm or less, preferably 500 nm or less, more preferably 200 nm or less, furthermore preferably 100 nm or less, particularly preferably 90 nm or less and most preferably 80 nm or less. When the number average particle size exceeds 1000 nm, the storage stability of the aqueous dispersion tends to be degraded, and the coating film tends to be nonuniform because the film formability at the time of coating with the aqueous dispersion is poor.

Further, from the viewpoint of being excellent in the storage stability of the aqueous dispersion and the film formability at the time of coating with the aqueous dispersion, the volume average particle size of the polyolefin copolymer in the aqueous dispersion is preferably 1000 nm or less, in particular preferably 500 nm or less, more preferably 200 nm or less, furthermore preferably 100 nm or less and particularly preferably 90 nm or less.

The particle size distribution index (volume average particle size/number average particle size) is preferably 1 to 3, more preferably 1 to 2.5 and furthermore preferably 1 to 2, from the viewpoint of the storage stability of the aqueous dispersion and the wettability at the time of coating with the aqueous dispersion. When the particle size distribution index exceeds 3, the storage stability of the aqueous dispersion is sometimes degraded. On the other hand, when the particle size distribution index is less than 1, the wettability at the time of coating with the aqueous dispersion is sometimes degraded.

The aqueous dispersion of the present invention is stable in the acidic region, and the pH of the aqueous dispersion is preferably 2 to 6 and in particular preferably 2.5 to 4.5. The stability of the aqueous dispersion in the present invention, as referred to herein, means the property that aggregation or precipitation of the distributed resin particles is not apparently found, and the uniformly dispersed condition (free from the phase separation) is maintained.

Preferably, the aqueous dispersion of the present invention substantially contains no nonvolatile aqueous dispersing aid. The nonvolatile aqueous dispersing aid remains in the coating film obtained from the aqueous dispersion, and plasticizes or hydrophilizes the coating film. Accordingly, the nonvolatile aqueous dispersing aid degrades the coating film properties such as the cohesiveness to the substrate, the water resistance and the solvent resistance. The aqueous dispersion of the present invention is an aqueous dispersion using the polyolefin copolymer, and hence is excellent in water dispersibility to be capable of being an aqueous dispersion substantially containing no nonvolatile aqueous dispersing aid.

Herein, the phrase that "substantially containing no nonvolatile aqueous dispersing aid" means the condition that the content of the nonvolatile aqueous dispersing aid is less than 0.1 part by mass in relation to 100 parts by mass of the polyolefin copolymer component, by avoiding positive addition of the nonvolatile aqueous dispersing aid to the concerned system. The content of the nonvolatile aqueous dispersing aid is preferably null. Here, the nonvolatility means the condition such that no boiling point is found under normal pressure or the boiling point is as high as 300°C or higher under normal pressure.

In the present invention, the nonvolatile aqueous dispersing agent means a nonvolatile chemical or compound added to promote the preparation of an aqueous dispersion or to stabilize the aqueous dispersion when an aqueous dispersion is prepared. Specific examples of the nonvolatile aqueous dispersing agent include: emulsifiers, compounds having a protective colloid function, modified waxes, high amino-modified compounds, high-acid-number acid-modified compounds and water-soluble polymers. Examples of the emulsifiers include: cationic emulsifiers, anionic emulsifiers, nonionic emulsifiers and amphoteric emulsifiers; and surfactants in addition to the emulsifiers generally used for emulsion polymerization. Examples of the anionic emulsifiers include: sulfuric acid ester salts of higher alcohols, higher alkylsulfonic acid salts, higher carboxylic acid salts, alkylbenzenesulfonic acid salts, polyoxyethylene alkylsulfate salts, polyoxyethylene alkyl phenyl ether sulfate salts and vinyl sulfosuccinate. Examples of the nonionic emulsifiers include: compounds having polyoxyethylene structure such as polyoxyethylene alkyl ether, polyoxyethylene alkyl phenyl ether, polyethylene glycol fatty acid ester, ethylene oxide-propylene oxide block copolymer, polyoxyethylene fatty acid amide and ethylene oxide-propylene oxide copolymer; and sorbitan derivatives such as polyoxyethylene sorbitan fatty acid ester. Examples of the cationic emulsifiers include: quaternary ammonium salts such as alkyl trimethyl ammonium salt and dialkyl dimethyl ammonium salt; and alkyl amine salts. Examples of the amphoteric emulsifiers include: lauryl betaine and lauryl dimethyl amine oxide.

Examples of the compounds having a protective colloid function, modified waxes, high amino-modified compounds, high-acid-number acid-modified compounds and water-soluble polymers include compounds generally used as the dispersion stabilizers for fine particles such as: polyvinyl alcohol; amino-modified polyvinyl alcohol; hydroxyethyl cellulose; hydroxypropyl cellulose; modified starch; polyvinylpyrrolidone; polyacrylic acid and slats thereof; amino-modified polyolefin waxes usually having a number average molecular weight of 5000 or less such as amino group-containing polyethylene wax, amino group-containing polypropylene wax and amino group-containing polyethylene-propylene wax and the salts of these waxes; water soluble acrylic copolymers having amino groups; gelatin; gum arabic; and casein.

The aqueous medium in the aqueous dispersion of the present invention means, as described above, water or a mixed liquid composed of water and an organic solvent. In the present invention, it is preferable to use as an aqueous medium a mixed liquid composed of water and an organic solvent because such a mixed liquid has an effect to promote the preparation of a dispersion in the preparation of an aqueous dispersion from the polyolefin copolymer. It is preferable to use as the organic solvent an organic solvent in which the solubility in water at 20°C is 50 g/L or more and the boiling point is 30 to 250°C.

In the preparation of the aqueous dispersion from the polyolefin copolymer, the addition of such an organic solvent can promote the preparation of a dispersion of the polyolefin copolymer in an aqueous medium and can reduce the particle size of the polyolefin copolymer, even when the content of the N-substituted imide unit derived from an unsaturated carboxylic acid anhydride unit is small, and even when no nonvolatile aqueous dispersing aid is substantially added.

The solubility of the organic solvent in water at 20°C is preferably 100 g/L and more and more preferably 600 g/L or more. Those organic solvents which dissolve in water in an optional proportion are particularly preferable. By using such organic solvents, the effect of promoting the preparation of an aqueous dispersion and the effect of reducing the particle size can be made satisfactory.

The boiling point of the organic solvent is preferably, in particular, 50 to 200°C. When the boiling point of the organic solvent is lower than 30°C, the proportion of the organic solvent evaporated at the time of preparing an aqueous dispersion is large and the efficiency of the preparation of the aqueous dispersion is sometimes not sufficiently improved. When the boiling point exceeds 250°C, the organic solvent tends to remain in the coating film obtained from the aqueous dispersion, and the water resistance and the solvent resistance tend to be degraded.

Specific examples of the organic solvent having a solubility in water at 20°C of 50 g/L or more and a boiling point of 30 to 250°C include: alcohols such as methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol and cyclohexanol: ketones such as methyl ethyl ketone, methyl isobutyl ketone, ethyl butyl ketone, cyclohexanone and isophorone; ethers such as tetrahydrofuran and dioxane; esters such as ethyl acetate, n-propyl acetate, isopropyl acetate, n-butyl acetate, isobutyl acetate, sec-butyl acetate, 3-methoxybutyl acetate, methyl propionate, ethyl propionate, diethyl carbonate and dimethyl carbonate; glycol derivatives such as ethylene glycol, ethylene glycol monomethyl ether, ethylene glycol monoethyl ether, ethylene glycol monopropyl ether, ethylene glycol monobutyl ether, ethylene glycol ethyl ether acetate, diethylene glycol, diethylene glycol monomethyl ether, diethylene glycol monoethyl ether, diethylene glycol monobutyl ether, diethylene glycol ethyl ether acetate, propylene glycol, propylene glycol monomethyl ether, propylene glycol monobutyl ether and propylene glycol methyl ether acetate; and further, 3-methoxy-3-methylbutanol, 3-methoxybutanol, acetonitrile, dimethylformamide, dimethylacetamide, diacetone alcohol and ethyl acetoacetate. These organic solvents may be used as mixtures of two or more thereof.

Because of the high effect of promoting the preparation of aqueous dispersions and easy removal of the organic solvent from the aqueous media by the below described method, preferable among the above-listed organic solvents are ethanol, n-propanol, isopropanol, n-butanol, methyl ethyl ketone, cyclohexanone, tetrahydrofuran, dioxane, ethylene glycol monoethyl ether, ethylene glycol monopropyl ether and ethylene glycol monobutyl ether; particularly preferable are ethanol, n-propanol, isopropanol and tetrahydrofuran.

The content of the organic solvent in the aqueous medium is preferably 50% by mass or less, more preferably 1 to 40% by mass, furthermore preferably 2 to 35% by mass and particularly preferably 3 to 30% by mass. When the content of the organic solvent exceeds 50% by mass, the effect of promoting the preparation of an aqueous dispersion tends to remain unchanged or to be degraded.

Such an organic solvent as described above, added in the preparation of an aqueous dispersion from the polyolefin copolymer can be removed from the aqueous dispersion after the preparation of the aqueous dispersion. For example, by a solvent removal operation called stripping, the organic solvent can be partially removed from the aqueous dispersion. By such stripping, the content of the organic solvent can be reduced to 0.1% by mass or less where necessary. Even when the content of the organic solvent is 0.1% by mass or less, the performances of the aqueous dispersion are not affected. Examples of the stripping method may include a method in which the aqueous dispersion is heated with stirring either under normal pressure or under reduced pressure, and thus the organic solvent is distilled off. The aqueous medium is distilled off to increase the resin solid content concentration in the aqueous dispersion, and hence the resin solid content concentration can be regulated to fall in the below-described preferable range.

The solid content concentration of the polyolefin copolymer (P) included in the aqueous dispersion (M) of the present invention or the solid content concentration of the polyolefin copolymer (Q) included in the aqueous dispersion (N) of the present invention can be appropriately selected according to the application purpose and the storage method. In either of these two aqueous dispersions, the solid content concentration is preferably 2 to 60% by mass, more preferably 5 to 50% by mass and furthermore preferably 10 to 45% by mass of the aqueous dispersion. The solid content concentration made to fall within such a range enables the thickness obtained by applying the aqueous dispersion to be maintained satisfactory.

The viscosity of the aqueous dispersion of the present invention, as measured with a B-type viscometer under a condition of 20°C, is preferably 100000 mPa·s or less, more preferably 10000 mPa·s or less, furthermore preferably 5000 mPa·s, particularly preferably 1000 mPa·s or less and most preferably 500m Pa·s or less. When the viscosity of the aqueous dispersion exceeds 100000 mPa·s, it is difficult to apply the aqueous dispersion.

It is possible to mix various additives with the aqueous dispersion of the present invention within the ranges not impairing the effects of the present invention, for the purpose of achieving the performances required for the intended application. Examples of the additives that can be added to the aqueous dispersion of the present invention include: other resins other than the polyolefin copolymer; inorganic fine particles; cross-linking agents; and aqueous dispersions or aqueous solutions of these additives.

The above-described other resins (hereinafter, referred to as other resins, as the case may be) other than the polyolefin copolymer are not particularly limited. Examples of such other resins include: polyvinyl acetate, polyvinyl alcohol, polyvinyl chloride, acrylic resin, acrylic silicon resin, ethylene-vinyl acetate copolymer, vinyl acetate-acrylic copolymer, ethylene-aminoacrylamide copolymer, ethylene-aminoacrylate copolymer, polyvinylidene chloride, ethylene-(meth)acrylic acid copolymer, styrene-maleic acid resin, styrene-aminoalkylmaleimide copolymer, styrene-butadiene resin, styrene elastomer, butadiene resin, acrylonitrile-butadiene resin, poly(meth)acrylonitrile resin, (meth)acrylamide resin, chlorinated polyethylene resin, chlorinated polypropylene resin, polyester resin, modified nylon resin, urethane resin, phenolic resin, silicone resin, epoxy resin, polyethyleneimine, UV-curable resins, and aqueous dispersions and aqueous solutions of these resins. These may be used as mixtures of two or more thereof.

Examples of the above-described inorganic fine particles include: metal fine particles and metal oxides fine particles such as magnesium oxide, zinc oxide, tin oxide and titanium oxide; and inorganic particles of calcium carbonate, silica, barium sulfate, calcium silicate, zeolite, kaolinite, halloysite, magnesium carbonate, calcium sulfate, mica, talc, pseudo-boehmite, alumina, aluminum silicate, calcium silicate, magnesium silicate, zirconium oxide, zirconium hydroxide, cerium oxide, lanthanum oxide and yttrium oxide. These inorganic particles may also be used as mixtures of two or more types thereof.

The average particle size of the inorganic particles is preferably 0.0005 to 100 $\mu$m and more preferably 0.005 to 10 $\mu$m, from the viewpoint of the stability of the aqueous dispersion.

As the cross-linking agent, the following can be used: a cross-linking agent having a self-cross-linkability; a compound having in the molecule thereof a plurality of functional groups capable of reacting with an amino group, an acrylic acid ester or a carboxyl group; and a metal complex having polyvalent coordination positions. Specifically, preferable are, for example, hydrazide compounds, isocyanate compounds, melamine compounds, urea compounds, epoxy compounds, carbodiimide compounds, oxazoline group-containing compounds, zirconium salt compounds, silane coupling agents and organic peroxides. When the polyolefin copolymer includes as a constituent component thereof an unsaturated carboxylic acid unit, the polyolefin copolymer is excellent, for example, in the reactivity with a cross-linking agent having in the molecule thereof a plurality of functional groups reacting with carboxyl groups, and hence more preferable among these cross-linking agents is a cross-linking agent having in the molecule thereof a plurality of functional groups reacting with carboxyl groups. These cross-linking agents may also be used in combinations of two or more thereof.

The addition of such a cross-linking agent as described above to the aqueous dispersion of the present invention enables the coating film obtained from the aqueous dispersion to be imparted with more excellent performances of the properties such as water resistance, solvent resistance and heat resistance. The addition amount of the cross-linking agent is in terms of the solid content of the cross-linking agent, preferably in a range from 0.01 to 300 parts by mass, more preferably in a range from 0.1 to 100 parts by mass, particularly preferably in a range from 0.2 to 50 parts by mass and furthermore preferably in a range from 0.5 to 30 parts by mass, in relation to 100 parts by mass of the solid content of the polyolefin copolymer, such as polyethylene copolymer in the aqueous dispersion.

Further, where necessary, the additives such as the following may also be added to the aqueous dispersion: various chemicals such as a leveling agent, an antifoaming agent, an anti-popping agent, a pigment dispersant, an ultraviolet absorber, a catalyst, a photocatalyst, an UV curing agent and an antistatic agent; pigments or dyes; and carbon black and carbon nanotubes. Within a range not impairing the stability of the aqueous dispersion, organic or inorganic compounds other than the above-described chemical substances can also be added to the aqueous dispersion.

The foregoing additives such as the other resins, inorganic particles, cross-linking agents, various chemicals, pigments and dyes may be used each alone or in combinations of two or more thereof.

The aqueous dispersion of the present invention is excellent in film formability (coating film forming property), and can form transparent coating films by being applied to various substrates and then subjected to various drying steps. The aqueous dispersion of the present invention is excellent in the cohesiveness to a wide variety of substrates such as metals, glass, plastic moldings, films, fibers, nonwoven fabrics, wood, synthetic papers and papers, and hence can be used as an adhesive.

In the present invention, the adhesiveness can be evaluated by the following method. Specifically, a coating film is provided on a film substrate by applying and drying the aqueous dispersion. Then, the coating film sides of two such coated film substrates are bonded to each other, and the two coated film substrates are exerted with a load for a predetermined time while being heated with a device such as a heat pressing machine to yield a laminate in which the two film substrates are made to adhere to each other. Then, by measuring with an apparatus such as a tensile tester the strength required for peeling between the film substrates of the laminate, the adhesiveness can be evaluated. The peel strength is varied depending on the use conditions and the applications, and hence is not limited; however, for an adhesive film cut out to a width of 15 mm, the peel strength is preferably 0.2 N/15 mm or more, more preferably 0.5 N/15 mm or more, furthermore preferably 1 N/15 mm or more, particularly preferably 2 N/15 mm or more and most preferably 3 N/15 mm or more.

The coating film obtained from the aqueous dispersion of the present invention is excellent in heat resistance because the polyolefin copolymer component included in the aqueous dispersion has an imide structure.

In the present invention, the heat resistance can be evaluated by the following method. Specifically, the heat resistance can be evaluated by measuring the peel strength in the foregoing adhesiveness evaluation in an environment set at 70°C. In this case, the peel strength for evaluating the heat resistance is varied depending on the use conditions and the applications, and hence is not limited; however, for an adhesive film cut out to a width of 15 mm, the peel strength is preferably 0.2 N/15 mm or more, more preferably 0.5 N/15 mm or more, furthermore preferably 1 N/15 mm or more, particularly preferably 2 N/15 mm or more and most preferably 3 N/15 mm or more.

The aqueous dispersion of the present invention can be used in various applications, in addition to use as an adhesive, as a primer, an anchor coating agent, a surface modifying agent, a surface protecting agent, a fiber modifying agent, a coating material for electrodeposition, an anti-rust coating material, a coating material for building materials, an ink accepting layer, an ink binder, a binder for batteries, an antistatic agent, a lubricant, a wetting agent, a release coating material, an anti-fog coating material, a waterproof coating material, a water repellent coating material and an antibacterial coating film.


<Manufacturing Method for Aqueous Dispersion>

Next, the manufacturing method for the aqueous dispersion is described.

The manufacturing method for manufacturing the aqueous dispersion (M) of the present invention is such that the polyolefin copolymer (P), an aqueous medium and an acid are stirred at 80 to 250°C.

When the aqueous dispersion (M) of the present invention is prepared, by stirring the polyolefin copolymer (P), an aqueous medium and an acid at 80 to 250°C in a hermetically sealable vessel, the polyolefin copolymer (P) having the substituents represented by formula (III) can be dispersed.

The manufacturing method for obtaining the aqueous dispersion (N) of the present invention is such that the polyolefin copolymer (Q) and an aqueous medium are stirred at 80 to 250°C.

Also, when the aqueous dispersion (N) of the present invention is manufactured, by stirring the polyolefin copolymer (Q), and an aqueous medium at 80 to 250°C in a hermetically sealable vessel, the polyolefin copolymer (Q) can be dispersed.

Such a hermetically sealable vessel is only required to have a tank in which a liquid can be placed, and to allow the polyolefin copolymer, an aqueous medium and an acid placed in the tank to be appropriately stirred. More preferably such an apparatus allows a solid/liquid stirring apparatus or an emulsifying apparatus to be used and is pressure-proofed.

In the manufacturing method for these aqueous dispersions, the stirring method and the rotation speed for stirring are not particularly limited. In the present invention, the manufacture of an aqueous dispersion can be sufficiently achieved even with such a low-speed stirring that allows the polyolefin copolymer to take a suspended condition in the aqueous medium, and hence no high-speed stirring (for example, 1000 rpm or more) is necessary. Accordingly, the aqueous dispersion can be manufactured even with a simple apparatus.

In such a vessel as described above, the polyolefin copolymer (P), an aqueous medium and an acid, or the polyolefin copolymer (Q) and an aqueous medium are placed, then continuously stirred for 5 to 180 minutes while the temperature inside the tank is being maintained at 80 to 250°C, preferably at 90 to 200°C and more preferably at 100 to 190°C, and thus the polyolefin copolymer can be sufficiently dispersed. When the temperature inside the tank is lower than 80°C, the dispersion effect of the polyolefin copolymer is low, and even when the temperature inside the tank exceeds 250°C, the aqueous dispersion effect is no more improved. Subsequently, for example, by cooling to 40°C with stirring, an aqueous dispersion can be obtained.

According to such a method, substantially without adding any nonvolatile aqueous dispersing aid, the polyolefin copolymer can be satisfactorily converted into an aqueous dispersion.

The polyolefin copolymer is extremely satisfactorily dispersed in an aqueous medium, and thus, almost or absolutely no undispersed resin remains in the aqueous medium. However, for the purpose of removing the foreign matter and a small amount of the undispersed resin in the vessel, when the aqueous dispersion is dispensed, a filtration step may also be provided. The filtration method is not limited; however, examples of such a method include a method in which filtration is performed with a 300 mesh stainless steel filter (wire diameter: 0.035 mm, plain woven) under pressure (for example, at an air pressure of 0.5 MPa). 5 The provision of such a filtration step enables to remove the foreign matter and the undispersed resin even when the foreign matter and the undispersed resin are present, and thus the aqueous dispersion can be used in the subsequent steps without problems.

Additionally, by measuring after the filtration the amount of the undispersed resin remaining on the filter, the aqueous dispersion yield can be determined. The aqueous dispersion yield is preferably 50% or more, more preferably 70% or more, furthermore preferably 85% or more, particularly preferably 95% or more and most preferably 100%.

In such a manner as described above, the polyolefin copolymer is dispersed in the aqueous medium to prepare a stable aqueous dispersion.

<Laminate>

Next, the laminate of the present invention is described. In the laminate of the present invention, a resin layer including the polyolefin copolymer is formed on at least part of the substrate. In particular, in the laminate, the resin layer (coating film) is preferably formed by coating at least part of the substrate with the aqueous dispersion of the present invention and by drying the applied aqueous dispersion.

The material for the substrate used for the laminate of the present invention is not particularly limited. Examples of such a material include: resins such as nylon 6, nylon 66, nylon 46, polyethylene terephthalate, polyethylene naphthalate, polytrimethylene terephthalate, polytrimethylene naphthalate, polybutylene terephthalate, polybutylene naphthalate, polyethylene succinate, polyglycolic acid, polylactic acid, polypropylene, polyethylene, polyurethane, polyimide resin, polycarbonate resin, polyallylate resin, ABS resin and acrylic resin; and the mixtures of these resins, papers, synthetic papers, metals, glass, wood, fibers, nonwoven fabrics, thermoplastic elastomers, rubbers and latex moldings. The material for the substrate used for the laminate of the present invention may also be composite materials composed of these materials.

The thickness and the shape of the substrate are not particularly limited. In consideration of the general versatility and the handleability, the substrate is preferably a 1- to 200-$\mu$m thick film-shaped substrate. In particular, substrate is preferably a film formed of a thermoplastic resin. The film may be an unstretched or stretched film, and the production method thereof is also not limited.

The aqueous dispersion of the present invention is excellent in film formability. Accordingly, the aqueous dispersion of the present invention can be uniformly applied to various substrate surfaces by the heretofore known film formation methods such as gravure roll coating, reverse roll coating, wire bar coating, lip coating, air knife coating, curtain flow coating, spray coating, dip coating and brush coating. Then, a coated substrate is subjected to setting, where necessary, at around room temperature, then subjected to a heat treatment for drying or for drying and baking, and thus a laminate can be formed by making a uniform resin layer (coating film) cohere to the substrate surface.

As an apparatus for the heat treatment, a common hot air circulation oven, a common infrared heater or the like may be used. The heating temperature and the heating time are appropriately selected according to the properties of the substrate, which is an object of coating, and the types and the mixing amounts of the additives. In consideration of the economic efficiency, the heating temperature is preferably 30 to 250°C, more preferably 60 to 200°C and particularly preferably 80 to 180°C. From the viewpoint of economic efficiency, the heating time is preferably 1 second to 20 minutes, more preferably 5 seconds to 15 minutes and particularly preferably 5 seconds to 10 minutes.

The thickness of the formed resin layer (coating film) is appropriately selected according to the intended applications. Among such thickness values, the thickness of the resin layer is preferably 0.01 to 1000 $\mu$m, more preferably 0.1 to 100 $\mu$m and particularly preferably 0.1 to 50 $\mu$m. The thickness of the coating film may be nonuniform depending on the intended applications; however, in general, the thickness of the coating film is preferably uniform.

For the purpose of regulating the thickness of the coating film, it is preferable to use an aqueous dispersion having a solid content concentration appropriate for the targeted thickness of the coating film, in addition to the appropriate selection of the apparatus to be used for coating and the use conditions of the apparatus. The concentration of this case can be regulated by the feed composition at the time of the preparation of the aqueous dispersion. Alternatively, the concentration of this case may also be regulated by appropriately diluting or concentrating the obtained aqueous dispersion.

Examples

Hereinafter, the present invention is specifically described with reference to Examples. However, the present invention is not limited by these Examples.

Various properties were measured or evaluated by the following methods.

1. Properties of Anhydride-Containing Copolymer and Polyolefin Copolymer

(1) Composition

The composition was determined with a $^1$H-NMR analyzer (ECA 500, 500 MHz, manufactured by JEOL Ltd.). Tetrachloroethane (d$_2$) was used as a solvent and the measurement was performed at 120°C.

(2) Acid Number (Content of Unsaturated Carboxylic Acid)

By using acetone as a solvent, the polyolefin copolymer was Soxhlet extracted and then dried. In 30 ml of a mixed tetrahydrofuran/toluene/water (mass ratio: 20/4.8/0.2) solvent, 0.25 g of the polyolefin copolymer was placed and heated with stirring on a hot stirrer until the polyolefin copolymer was completely dissolved. The vapor generated during the heating with stirring was refluxed through a Dimroth condenser. After completion of the dissolution, the solution temperature was reduced by cooling to 60 to 70°C, and one or two drops of an indicator (a 0.1% by mass aqueous solution of cresol red, neutralized with KOH) were added to the solution. Then, while the solution was being stirred with the solution temperature maintained at 60 to 70°C, a 0.1 mol/L methanol solution of KOH was dropwise added to the solution, and the acid number (mg KOH/g) of the polyolefin copolymer was determined from the titer (mL) of the methanol solution of KOH at the time point where the color of the polyolefin copolymer solution turned purple and the purple color was unchanged for 20 seconds. By using 30 ml of the mixed tetrahydrofuran/toluene/water (mass ratio: 20/4.8/0.2) solvent containing no polyolefin copolymer added thereto, the same operation as described above was performed, and the value thus obtained was adopted as a blank titer. The measurement was performed three times, and the average value over the three values was adopted as the measured value. The acid number was derived on the basis of the following formula:

$$\text{Acid number (mg KOH/g)} = \{[\text{titer (mL)}] - [\text{blank titer (mL)}]\} \times 56.1 \times 0.1 \times (\text{correction factor for 0.1 mol/L methanol solution of KOH}) \div 0.25 \text{ (mg)}]$$

(3) Measurement of Mass Average Molecular Weight

The mass average molecular weight was measured at 40°C with a GPC apparatus (Model: HLC-8020GPC, column: TSK-GEL, manufactured by Tohso Corp.). Ortho-Dichlorobenzene was used as an eluent. The mass average molecular weight was determined relative to the TSK polystyrene standards. When the sample was not dissolved in trichlorobenzene and the mass average molecular weight measurement was impossible, the melt flow rate value described in the following (4) was adopted as an index for the molecular weight.

(4) Melt Flow Rate Value (MFR)

The melt flow rate value was measured according to the method described in JIS K7210: 1999 (190°C, load: 20.2 N).

2. Properties of Aqueous Dispersion

(1) Aqueous Dispersion Yield

The aqueous dispersion after the preparation of the aqueous dispersion was filtered with a 300 mesh stainless steel filter (wire diameter: 0.035 mm, plain woven) under pressure (at an air pressure of 0.5 MPa). After the filtration, the resin remaining on the filter was vacuum dried at 110°C for 2 hours. The mass of the resin obtained after the drying was represented by S(g), and the aqueous dispersion yield (%) was calculated on the basis of the following formula:

$$\text{Aqueous dispersion yield (\%)} = [S(g)/\text{mass (g) of fed}$$
$$\text{polyolefin copolymer}] \times 100$$

(2) Stability of Aqueous Dispersion

The stability of the aqueous dispersion was evaluated by visual observation on the basis of the following standards.

G(Good): Neither aggregation nor precipitation of the dispersed resin particles occurs, and the aqueous dispersion is uniform.

A (Average) : Partial aggregation or precipitation of the dispersed resin particles occurs.

P(Poor): The resin is completely precipitated, and no form of dispersion is found.

(3) Average Particle Size of Polyolefin Copolymer in Aqueous Dispersion

The number average particle size (nm) and the volume average particle size of the aqueous dispersion obtained by filtering with a 300 mesh stainless steel filter (wire diameter: 0.035 mm, plain woven) under pressure (at an air pressure of 0.5 MPa) were determined with the Microtrac Particle Size Distribution Analyzer (UPA150, Model No. 9340, based on dynamic light scattering, manufactured by Nikkiso Co., Ltd.). The refractive index of the resin used for the particle size derivation was taken to be 1.50.

(4) Solid Content Concentration

The aqueous dispersion obtained by filtering with a 300 mesh stainless steel filter (wire diameter: 0.035 mm, plain woven) under pressure (at an air pressure of 0.5 MPa) was weighed in an appropriate amount and heated at 150°C until the mass of the residue (the solid content) reached a constant mass, and thus the solid content concentration (% by mass) was determined.

(5) Viscosity

The rotation viscosity (mPa·s) at 20°C of the aqueous dispersion obtained by filtering with a 300 mesh stainless steel filter (wire diameter: 0.035 mm, plain woven) under pressure (at an air pressure of 0.5 MPa) was measured with a B-type viscometer (digital viscometer, Model DVL-BII, manufactured by Tokimec, Inc.).

(6) pH

The pH at 20°C of the aqueous dispersion obtained by filtering with a 300 mesh stainless steel filter (wire diameter: 0.035 mm, plain woven) under pressure (at an air pressure of 0.5 MPa) was measured with a pH meter (F-52, manufactured by Horiba, Ltd.).

3. Properties of Resin Layer (Coating Film) Including Polyolefin Copolymer

(1) Cohesiveness

As the substrate, the following were used: a linear low-density polyethylene (PE) film (thickness: 50 $\mu$m, manufactured by Tohcello Co., Ltd.), a stretched polypropylene (OPP) film (thickness: 50 $\mu$m, manufactured by Tohcello Co., Ltd.), a stretched polyethylene terephthalate (PET) film (thickness: 25 $\mu$m, manufactured by Unitika Ltd.), a stretched polyamide (Ny6) film (thickness: 25 $\mu$m, manufactured by Unitika Ltd.) and a glass plate (thickness: 1.5 mm, with flat and smooth surface). The obtained aqueous dispersion was applied to each of these substrates with a Mayer bar and dried at 90°C for 2 minutes to yield a laminate having a 1-$\mu$m thick coating film. Each of the thus obtained laminates was allowed to stand at room temperature for 1 day, then a cellophane tape (TF-12, manufactured by Nichiban Co., Ltd.) was bonded to the adhesive surface of the laminate, and the degree of peeling when the tape was peeled at once was visually evaluated on the basis of the following standards:

G(Good): Absolutely no peeling occurs.
A(Average): Partial peeling occurs.

P(Poor): Whole peeling occurs.

(2) Adhesiveness

As the substrate, a linear low-density polyethylene (PE) film (thickness: 50 μm, manufactured by Tohcello Co., Ltd.) was used. The obtained aqueous dispersion was applied to the PE film with a Mayer bar and dried at 90°C for 2 minutes to yield a laminate having a 2-μm thick coating film. Two sheets were prepared from the obtained laminate and the coating films of the two sheets are bonded to each other, and were pressed at 110°C with a heat press (press pressure: 0.2 MPa, press time: 10 seconds).

A sample obtained in this way was cut out to a width of 15 mm to prepare a specimen, the specimen was allowed to stand at room temperature for 1 day, and the peel strength of the specimen was measured with a tensile tester (Intesco Precision Universal Material Tester, Model 2020, manufactured by Intesco Co., Ltd.) at room temperature at a tensile rate of 200 mm/min, on the basis of the T-peel method. The measurement was performed five times, and the average value over the five values was adopted as the measured value.

(3) Heat Resistance

In the peel strength measurement in the above described 3.(2) adhesiveness evaluation, by using a tensile tester equipped with a constant-temperature apparatus, the peel strength was measured in an atmosphere of 70°C, at a tensile rate of 200 mm/min, on the basis of the T-peel method. The measurement was performed five times, and the average value over the five values was adopted as the measured value.

(4) Water Resistance

As the substrate, a glass plate (thickness: 1.5 mm, with flat and smooth surface) was used. The obtained aqueous dispersion was applied to the glass plate with a Mayer bar and dried at 90°C for 2 minutes, to yield a laminate having a 10-μm thick coating film. The obtained laminate was immersed in water, and allowed to stand still at 45°C for 24 hours, and then the degree of the solubility of the coating film and, the degree of the peeling condition of the coating film and the like were visually evaluated on the basis of the following standards:

G(Good): No exterior appearance change is found.
A(Average): Whitening, swelling and partial peeling of the coating film are found.
P(Poor): The coating film is dissolved, or cannot be identified because of the peeling of the coating film.

(5) Solvent Resistance [Test (i)]

The same laminate as used in the above described 3.(4) water resistance evaluation was prepared. The obtained laminate was immersed in methyl ethyl ketone, and allowed to stand still at room temperature for 24 hours, and then the degree of the solubility of the coating film and, the degree of the peeling condition of the coating film and the like were visually evaluated on the basis of the following standards:

G(Good): No exterior appearance change is found.
A(Average): Whitening, swelling and partial peeling of the coating film are found.
P(Poor): The coating film is dissolved, or cannot be identified because of the peeling of the coating film.

(6) Solvent Resistance [Test (ii)]

The same laminate as used in the above described 3.(4) water resistance evaluation was prepared. The obtained laminate was immersed in a mixed methyl ethyl ketone/xylene (mass ratio: 90/10) solvent, and allowed to stand still at 40°C for 24 hours, and then the degree of the solubility of the coating film and, the degree of the peeling condition of the coating film and the like were visually evaluated on the basis of the following standards:

G(Good): No exterior appearance change is found.
A(Average): Whitening, swelling and partial peeling of the coating film are found.
P(Poor): The coating film is dissolved, or cannot be identified because of the peeling of the coating film.

The resins used as the raw materials are as listed below.
As the anhydride-containing copolymers, the following resins were used.

LT4403: Lotader-4403, manufactured by Arkema Inc.

LT4700: Lotader-4700, manufactured by Arkema Inc.

TX8030: Bondine TX8030, manufactured by Arkema Inc.

HX8290: Bondine HX8290, manufactured by Arkema Inc.

HX8210: Bondine HX8210, manufactured by Arkema Inc.

UM2000: Umex 2000, manufactured by Sanyo Chemical Industries, Ltd.

E-A-MAH1: Prepared by high pressure radical polymerization of ethylene, ethyl acrylate and maleic anhydride according to the method described in GB Patent No. 2091745, U.S. Patent No. 4617366 and U.S. Patent No. 644044

E-A-MAH2: Prepared by the same method as for E-A-MAH1

E-A-MAH3: Prepared by the same method as for E-A-MAH1

UM1001: Umex 1001, manufactured by Sanyo Chemical Industries, Ltd.

PBE-MAH: Prepared by grafting maleic anhydride to a propylene-butene-ethylene ternary copolymer according to the method described in the preparation example of WO2004/104090

PE-MAH: Prepared by grafting maleic anhydride to a propylene-ethylene copolymer according to the method described in the preparation example of WO2004/104090

PBE-A-MAH: Prepared by grafting lauryl acrylate and maleic anhydride to a propylene-butene-ethylene ternary copolymer according to the method described in the preparation example of WO2004/104090

As the carboxylic acid-containing polyolefin copolymers, the following resins were used.

E-A-A1. Prepared by subjecting to a hydrolysis treatment and a heat degradation treatment an ethylene-ethyl acrylate copolymer obtained by a high pressure radical polymerization according to the method described in JP60-79008A

E-A-A2: Prepared by the same method as for E-A-A1

As an aminoacrylate-containing polyolefin copolymer, the following resin was used.

E-A: Prepared by high pressure radical polymerization according to the method described in JP53-6194B; the acid number was 0.0 mg KOH/g.

The preparation methods and the properties of the resins used as the raw materials are collected in Table 1.

[Table 1]

| Raw material resin | Composition | | | | | | | Molecular weight | | Preparation method |
|---|---|---|---|---|---|---|---|---|---|---|
| | Olefin hydrocarbon unit | | | (Anhydrous) carboxylic acid unit | | Acrylic acid ester unit | | Mass average molecular weight | MFR | |
| | Ethylene | Propylene | Butene | Type | mol% | Type | mol% | | | |
| | mol% | mol% | mol% | | | | | | g/10 min | |
| LT4403 | 93.2 | 0.0 | 0.0 | MAH | 0.1 | MA | 6.7 | Measurement impossible | 9 | High pressure radical polymerization |
| LT4700 | 89.2 | 0.0 | 0.0 | MAH | 0.5 | EA | 10.3 | Measurement impossible | 7 | High pressure radical polymerization |
| TX8030 | 95.2 | 0.0 | 0.0 | MAH | 0.9 | EA | 3.9 | Measurement impossible | 3 | High pressure radical polymerization |
| HX8290 | 93.1 | 0.0 | 0.0 | MAH | 0.9 | EA | 6.0 | Measurement impossible | 65 | High pressure radical polymerization |
| HX8210 | 97.1 | 0.0 | 0.0 | MAH | 0.9 | EA | 2.0 | Measurement impossible | 213 | High pressure radical polymerization |
| UM2000 | 98.6 | 0.0 | 0.0 | MAH | 1.4 | - | 0.0 | 16000 | - | MAH grafting to polyethylene resin |
| E-A-MAH1 | 91.7 | 0.0 | 0.0 | MAH | 1.9 | EA | 6.4 | Measurement impossible | 68 | High pressure radical polymerization |
| E-A-MAH2 | 89.7 | 0.0 | 0.0 | MAH | 6.6 | EA | 3.7 | Measurement impossible | 28 | High pressure radical polymerization |
| E-A-MAH3 | 85.9 | 0.0 | 0.0 | MAH | 11.1 | EA | 3.0 | Measurement impossible | 86 | High pressure radical polymerization |
| UM1001 | 0.0 | 99.0 | 0.0 | MAH | 1.0 | - | 0.0 | 40100 | - | MAH grafting to polypropylene resin |
| PBE-MAH | 16.6 | 63.1 | 17.5 | MAH | 2.8 | - | 0.0 | 40600 | - | MAH grafting to propylene copolymer |
| PE-MAH | 24.2 | 72.6 | 0.0 | MAH | 3.2 | - | 0.0 | 38000 | - | MAH grafting to propylene copolymer |
| PBE-A-MAH | 16.4 | 62.9 | 17.4 | MAH | 1.9 | LA | 1.4 | 50100 | - | MAH grafting to propylene copolymer |
| E-A-A1 | 92.8 | 0.0 | 0.0 | AA | 4.2 | EA | 3.0 | Measurement impossible | 330 | High pressure radical polymerization, followed by hydrolysis and heat degradation treatments |

EP 2 402 375 B1

23

(continued)

| Raw material resin | Composition | | | | | | | Molecular weight | | Preparation method |
| | Olefin hydrocarbon unit | | | (Anhydrous) carboxylic acid unit | | Acrylic acid ester unit | | Mass average molecular weight | MFR | |
| | Ethylene | Propylene | Butene | | | | | | | |
| | mol% | mol% | mol% | Type | mol% | Type | mol% | | g/10 min | |
| E-A-A2 | 87.7 | 0.0 | 0.0 | AA | 9.1 | EA | 3.2 | Measurement impossible | 345 | High pressure radical polymerization, followed by hydrolysis and heat degradation treatments |
| E-A | 95.3 | 0.0 | 0.0 | - | 0.0 | A | 4.7 | Measurement impossible | 122 | High pressure radical polymerization |

The abbreviations in Table 1 are as follows:
MAH: Maleic anhydride
AA: Acrylic acid
MA: Methyl acrylate
EA: Ethyl acrylate
LA: Lauryl acrylate
A: Dimethylaminoethyl acrylate

Example 1

In a 1-liter separable flask equipped with a thermometer, a stirrer, a liquid injector and a Dimroth condenser, 250 g of an anhydride-containing copolymer LT4403 and 500 g of toluene were placed, and under the condition that the stirrer was being rotated at 100 rpm, the flask was placed in an oil bath at 170°C. After a few minutes, the boiling of the toluene was identified, and the generated vapor was refluxed into the flask through the Dimroth condenser. After another few minutes, LT4403 was found to be completely dissolved, and then N,N-dimethylaminopropylamine {[$H_2N$-$(CH_2)_3$-$N(CH_3)_2$], hereinafter abbreviated as DMAPA} was added as an amino compound in an amount of 5-fold equivalent moles in relation to the number of moles of the carboxylic acid anhydride unit. The temperature inside the flask after the addition was 115°C, and the imidization reaction was performed while this condition was being maintained. After an elapsed time of 30 minutes, the disposition direction of the Dimroth condenser was changed, the pressure inside the flask was gradually further reduced, and the toluene and the unreacted amino compound in the flask were removed by distillation off. No generation of the vapors of the toluene and the unreacted amino compound from inside the flask was identified, then the pressure inside the flask was maintained at a reduced pressure of 4 kPa (abs) for further 10 minutes, and then the pressure was relieved, the stirrer was stopped, the flask was taken out from the oil bath, and thus the polyolefin copolymer inside the flask was taken out. The thus obtained polyolefin copolymer is the polyolefin copolymer (P), and is hereinafter referred to as <P-1>.

Examples 2 to 19

In each of Examples 2 to 19, the type of the anhydride-containing copolymer and the type and the addition amount of the amino compound were altered as shown in Table 2, the same operations as in Example 1 were performed, and thus the polyolefin copolymer (P) was obtained. The thus obtained polyolefin copolymers are referred to as <P-2> to <P-19>. In any of these Examples, the imidization reaction temperature was in range from 113 to 118°C.

Comparative Example 1

HX8290 was used as the anhydride-containing copolymer, n-hexylamine {[$H_2N$-$(CH_2)_5CH_3$], hereinafter abbreviated as n-HA} having no substituent represented by formula (I) was added in an amount of 1.3-fold equivalent moles in relation to the number of moles of the carboxylic acid anhydride in HX8290, the same operations as in Example 1 were performed, and thus a polyolefin copolymer was obtained. The thus obtained polyolefin copolymer is referred to as <R-1>. The imidization reaction temperature was 115°C.

Comparative Example 2

In a 1-liter separable flask equipped with a thermometer, a stirrer and a Dimroth condenser, 150 g of a carboxylic acid-containing polyolefin copolymer E-A-Al, 1 g of para-toluenesulfonic acid as a catalyst and 400 g of xylene were placed, and further, DMAPA as an amino compound was placed in the flask in an amount of 1.2-fold equivalent moles in relation to the number of moles of the acrylic acid in the raw material resin E-A-A1; under the condition that the stirrer was being orated at 100 rpm, the flask was placed in an oil bath at 170°C. After 10 minutes, the E-A-A1 in the flask was completely dissolved, and the temperature inside the flask was 145°C. This condition was maintained, and after an elapsed time of 17 hours, the disposition direction of the Dimroth condenser was changed, the pressure inside the flask was gradually further reduced, the xylene and the unreacted amino compound in the flask were removed by distillation off. No generation of the vapors of the xylene and the unreacted amino compound from inside the flask was identified, then the pressure inside the flask was maintained at a reduced pressure of 4 kPa (abs) for further 10 minutes, and then the pressure was relieved, the stirrer was stopped, the flask was taken out from the oil bath, and thus the polyolefin copolymer <R-2> inside the flask was obtained. The infrared spectrum of <R-2> was measured with the KBr method, and thus the absorptions at around 1650 [cm$^{-1}$] and 1560 [cm$^{-1}$] to be assigned to amide were identified.

Comparative Example 3

A polyolefin copolymer <R-3> was obtained by performing the same operations as in Comparative Example 2 except that E-A-A2 was used as the carboxylic acid-containing polyolefin copolymer. The infrared spectrum of <R-3> was measured with the KBr method, and thus the absorptions at around 1650 [cm$^{-1}$] and 1560 [cm$^{-1}$] to be assigned to amide were identified.

Comparative Example 4

A polyolefin copolymer <R-4> was obtained by altering the type of the anhydride-containing copolymer, and the type and the addition amount of the amino compound as shown in Table 3, and by performing the same operations as in Example 1. The imidization reaction temperature was 115°C.

The properties of the polyolefin copolymers <P-1> to <P-19> obtained in Examples 1 to 19 are shown in Table 2, and the properties of the polyolefin copolymers <R-1> to <R-4> obtained in Comparative Examples 1 to 4 are shown in Table 3.

[Table 2]

| Example | Composition for imidization reaction | | | Polyolefin copolymer | | | | | | | | | | | |
| | Anhydride-containing copolymer | Amino compound | | Name | Composition | | | | | | | | Acid number (content of Unsaturated carboxylic acid) | Molecular weight | |
| | | Type | Addition amount | | Olefin hydrocarbon unit | | | N-substituted imide unit derived from unsaturated carboxylic acid anhydride unit | | Acrylic acid ester unit | | Unsaturated carboxylic acid unit | | Mass average molecular weight | MFR |
| | | | | | Ethylene | Propylene | Butene | Type | | Type | | | | | |
| | | | Fold equivalent moles | | mol% | mol% | mol% | Type | mol% | Type | mol% | mol% | mg KOH/g | | g/10 min |
| 1 | LT4403 | DMAPA | 5.0 | P-1 | 93.2 | 0.0 | 0.0 | DMAPMI | 0.1 | MA | 6.7 | Smaller than detection limit | 0.37 | Measurement impossible | 8 |
| 2 | LT4700 | DMAPA | 2.0 | P-2 | 89.2 | 0.0 | 0.0 | DMAPMI | 0.5 | EA | 10.3 | Smaller than detection limit | 0.59 | Measurement impossible | 6 |
| 3 | TX8030 | DMAPA | 1.3 | P-3 | 95.2 | 0.0 | 0.0 | DMAPMI | 0.9 | EA | 3.9 | Smaller than detection limit | 0.78 | Measurement impossible | 3 |
| 4 | E-A-MAH1 | DMAPA | 1.3 | P-4 | 91.7 | 0.0 | 0.0 | DMAPMI | 1.9 | EA | 6.4 | Smaller than detection limit | 0.93 | Measurement impossible | 55 |
| 5 | E-A-MAH2 | DMAPA | 1.3 | P-5 | 89.7 | 0.0 | 0.0 | DMAPMI | 6.6 | EA | 3.7 | Smaller than detection limit | 1.01 | Measurement impossible | 23 |
| 6 | HX8290 | DMAPA | 1.3 | P-6 | 93.1 | 0.0 | 0.0 | DMAPMI | 0.9 | EA | 6.0 | Smaller than detection limit | 1.18 | Measurement impossible | 60 |
| 7 | HX8210 | DMAPA | 1.3 | P-7 | 97.1 | 0.0 | 0.0 | DMAPMI | 0.9 | EA | 2.0 | Smaller than detection limit | 1.04 | Measurement impossible | 202 |
| 8 | HX8290 | DEAPA | 1.3 | P-8 | 93.1 | 0.6 | 0.0 | DEAPMI | 0.9 | EA | 6.0 | Smaller than detection limit | 0.98 | Measurement impossible | 58 |

(continued)

| Example | Composition for imidization reaction | | | Polyolefin copolymer | | | | | | | | | | | | |
| | Anhydride-containing copolymer | Amino compound | | Name | Composition | | | | | | | | | Acid number (content of Unsaturated carboxylic acid) | Molecular weight | |
| | | Type | Addition amount | | Olefin hydrocarbon unit | | | N-substituted imide unit derived from unsaturated carboxylic acid anhydride unit | | Acrylic acid ester unit | | Unsaturated carboxylic acid unit | | | Mass average molecular weight | MFR |
| | | | | | Ethylene | Propylene | Butene | Type | | Type | | | | | | |
| | | | Fold equivalent moles | | mol% | mol% | mol% | Type | mol% | Type | mol% | mol% | mg KOH/g | | | g/10 min |
| 9 | HX8290 | DMAEA | 1.3 | P-9 | 93.1 | 0.0 | 0.0 | DMAEMI | 0.9 | EA | 6.0 | Smaller than detection limit | 1.13 | Measurement impossible | 60 |
| 10 | UM2000 | DMAPA | 1.3 | P-10 | 98.6 | 0.0 | 0.0 | DMAPMI | 1.4 | - | 0.0 | Smaller than detection limit | 1.08 | 16600 | - |
| 11 | UM1001 | DMAPA | 1.3 | P-11 | 0.0 | 99.0 | 0.0 | DMAPMI | 1.0 | - | 0.0 | Smaller than detection limit | 0.93 | 40800 | - |
| 12 | PBE-MAH | DMAPA | 1.3 | P-12 | 16.6 | 63.1 | 17.5 | DMAPMI | 2.8 | - | 0.0 | Smaller than detection limit | 0.95 | 42100 | - |
| 13 | PE-MAH | DMAPA | 1.3 | P-13 | 24.2 | 72.6 | 0.0 | DMAPMI | 3.2 | - | 0.0 | Smaller than detection limit | 1.20 | 40100 | - |
| 14 | PBE-A-MAH | DMAPA | 1.3 | P-14 | 16.4 | 62.9 | 17.4 | DMAPMI | 1.9 | LA | 1.4 | Smaller than detection limit | 1.05 | 51200 | - |
| 15 | HX8210 | DMAPA | 0.9 | P-15 | 97.1 | 0.0 | 0.0 | DMAPMI | 0.9 | EA | 2.0 | Smaller than detection limit | 3.13 | Measurement impossible | 203 |
| 16 | HX8210 | DMAPA | 0.6 | P-16 | 97.1 | 0.0 | 0.0 | DMAPMI | 0.6 | EA | 2.0 | 0.3 | 11.10 | Measurement impossible | 208 |

| Example | Composition for imidization reaction | | | Polyolefin copolymer | | | | | | | | | | | |
| | Anhydride-containing copolymer | Amino compound | | Name | Composition | | | | | | | | Acid number (content of Unsaturated carboxylic acid) | Molecular weight | |
| | | Type | Addition amount | | Olefin hydrocarbon unit | | | N-substituted imide unit derived from unsaturated carboxylic acid anhydride unit | | Acrylic acid ester unit | | Unsaturated carboxylic acid unit | | Mass average molecular weight | MFR |
| | | | | | Ethylene | Propylene | Butene | | | | | | | | |
| | | | Fold equivalent moles | | mol% | mol% | mol% | Type | mol% | Type | mol% | mol% | mg KOH/g | | g/10 min |
| 17 | HX8290 | DMAPA | 0.6 | P-17 | 93.1 | 0.0 | 0.0 | DMAPMI | 0.6 | EA | 6.0 | 0.3 | 10.98 | Measurement impossible | 62 |
| 18 | UM1001 | DMAPA | 0.6 | P-18 | 0.0 | 99.0 | 0.0 | DMAPMI | 0.6 | - | 0.0 | 0.3 | 8.1 | 40400 | - |
| 19 | PBE-MAH | DMAPA | 0.8 | P-19 | 16.6 | 63.1 | 17.5 | DMAPMI | 2.1 | - | 0.0 | 0.7 | 10.3 | 42100 | - |

The abbreviations in Table 2 are as follows.
DMAPA: Dimethylaminopropylamine
DEAPA: Diethylaminopropylamine [$H_2N$-$(CH_2)_3N(C_2H_5)_2$]
DMAEA: Dimethylaminoethylamine [$H_2N$-$(CH_2)_2N(CH_3)_2$]
DMAPMI: Dimethylaminopropylmaleimide
DEAPMI: Diethylaminopropylmaleimide
DMAEMI: Dimethylaminoethylmaleimide
MA: Methyl acrylate
EA: Ethyl acrylate
LA: Lauryl acrylate

[Table 3]

| Comparative Example | Composition for imidization reaction | | | Polyolefin copolymer | | | | | | | | | | | | |
| | Raw material resin | Amino compound | | Name | composition | | | | | | | | | Acid number (content of unsaturated carboxylic acid) | Molecular weight | |
| | | Type | Addition amounts | | Olefin hydrocarbon unit | N-substituted imide unit derived from unsaturated carboxylic acid anhydride unit | | Product unit of reaction with amino compound | | Acrylic acid ester unit | | Unsaturated carboxylic acid unit | | | Mass average molecular weight | MFR |
| | | | | | Ethylene | | | | | | | | | | | |
| | | | Fold equivalent moles | | mol% | Type | mol% | Type | mol% | Type | mol% | mol% | mg KOH/g | | | g/ 10 min |
| 1 | HX8290 | n-HA | 1.3 | R-1 | 93.1 | - | - | HMI | 0.9 | EA | 6.0 | Smaller than detection limit | 0.93 | Measurement impossible | 60 |
| 2 | E-A-A1 | DMAPA | 1.2 | R-2 | 92.8 | - | - | DMAPAA | 4.2 | EA | 3.0 | Smaller than detection limit | 0.21 | Measurement impossible | 302 |
| 3 | E-A-A2 | DMAPA | 1.2 | R-3 | 87.7 | - | - | DMAPAA | 9.1 | EA | 3.2 | smaller than detection limit | 0.22 | Measurement impossible | 305 |
| 4 | E-A-MAH3 | DMAPA | 1.3 | R-4 | 85.9 | DMAPMI | 11.1 | - | - | EA | 3.0 | Smaller than detection limit | 0.97 | Measurement impossible | 81 |

The abbreviations in Table 3 are as follows:
n-HA: n-Hexylamine
DMAPA: Dimethylaminopropylamine
HMI: Hexylmaleimide
DMAPAA: Dimethylaminopropylacrylamide
DMAPMI: Dimethylaminopropylmaleimide
EA: Ethyl acrylate

Example 20

In a 1-liter hermetically sealable, pressure proof glass vessel equipped with a stirrer and a heater, 140 g (20% by mass) of <P-1> as the polyolefin copolymer, formic acid (pKa=3.75) as an acid in an amount of 2.0-fold equivalent moles in relation to the number of moles of the substituent represented by formula (I) in the polyolefin copolymer, and 245 g (35% by mass) of n-propanol as an organic solvent in the aqueous medium were placed, and further distilled water was placed so as for the total amount of the raw materials to be 700 g. Next, the vessel was hermetically sealed, and the contents in the vessel were stirred and mixed with the rotation speed of the stirring blade set at 400 rpm. As a result of the stirring, no precipitate of the resin particulate substance was found in the bottom of the vessel and it was verified that the resin was in a suspended condition. Then, the power supply of the heater was turned on, the temperature inside the glass vessel was set at 130°C, and the contents of the vessel were further stirred for 120 minutes. Subsequently, the power supply of the heater was turned off, and the contents of the glass vessel were cooled while being stirred. When the temperature inside the glass vessel reached 40°C or lower, the stirring was terminated, and the contents of the glass vessel were filtered with a 300-mesh stainless steel filter to yield a cationic aqueous dispersion. The thus obtained aqueous dispersion is the aqueous dispersion (M), and is hereinafter referred to as <M-1>.

Examples 21 to 30 and 32 to 41

In each of Examples 21 to 30 and 32 to 41, the type of the polyolefin copolymer, the type of the acid, and the type and the amount of the organic solvent in the aqueous medium were altered as shown in Table 4, the same operations as in Example 20 were performed, and thus a cationic aqueous dispersion (M) was obtained. The aqueous dispersions thus obtained are referred to as <M-2> to <M-11> and <M-13> to <M-22>. The pKa of the acid, acetic acid, used in Example 30 is 4.76.

Example 31

In a 1-liter recovery flask, 300 g of the aqueous dispersion <M-10> obtained in Example 29 and 80 g of distilled water placed, and the aqueous medium was distilled off with a rotary evaporator. The flask was rotated while being kept warm with warm water at 80°C, and the pressure inside the flask was gradually reduced. When the distilled off amount reached 160 g, the content in the flask was recovered, and distilled water was added to the recovered content so as for the solid content concentration to be 20 % by mass, and thus cationic aqueous dispersion <M-12> having a low content of the organic solvent was obtained. In other words, the stripping was performed. The content of isopropanol included in this aqueous dispersion was measured with a gas chromatography to be equal to or less than the detection limit of 0.01% by mass.

Example 42

In a 0.5-liter separable flask equipped with a thermometer, a stirrer, a liquid injector and a Dimroth condenser, 150 g of the polyolefin copolymer <P-17> obtained in Example 17 and 100 g of toluene were placed, and under the condition that the stirrer was being rotated at 100 rpm, the flask was placed in an oil bath at 170°C. After a few minutes, the boiling of the toluene was identified, and the generated vapor was refluxed into the flask through the Dimroth condenser. After another few minutes, <P-17> was found to be completely dissolved, and then diethyl sulfate (hereinafter referred to as DES) as a quaternarizing agent was added in an amount of 1-fold equivalent moles in relation to the number of moles of the substituent represented by formula (I), contained in <P-17>. The temperature inside the flask after the addition was 109°C, and the quaternarization reaction was performed while this condition was being maintained. After an elapsed time of 30 minutes, the disposition direction of the Dimroth condenser was changed, the pressure inside the flask was gradually further reduced, and the toluene and the unreacted DES in the flask were removed by distillation off. No generation of the vapor from inside the flask was identified, then the pressure inside the flask was maintained at a reduced pressure of 4 kPa (abs) for further 10 minutes, and then the pressure was relieved, the stirrer was stopped, the flask was taken out from the oil bath, and thus the quaternarized polyolefin copolymer inside the flask was obtained. The thus obtained polyolefin copolymer is the polyolefin copolymer (Q), and is hereinafter referred to as <Q-1>. The steps so far are associated with the quaternarization reaction.

The following steps are associated with the aqueous dispersion preparation reaction. In a 1-liter hermetically sealable, pressure proof glass vessel equipped with a stirrer and a heater, 140 g (20% by mass) of the obtained polyolefin copolymer <Q-1> and 175 g (25% by mass) of n-propanol as the organic solvent in the aqueous medium were placed, and further distilled water was place so as for the total amount of the raw materials to be 700 g. Next, the vessel was hermetically sealed, and the contents in the vessel were stirred and mixed with the rotation speed of the stirring blade set at 400 rpm. As a result of the stirring, no precipitate of the resin particulate substance was found in the bottom of the vessel and it was verified that the resin was in a suspended condition. Then, the power supply of the heater was turned on, the temperature inside the glass vessel was set at 130°C, and the contents of the vessel were further stirred for 120 minutes. Subsequently, the power supply of the heater was turned off, and the contents of the glass vessel were cooled while being stirred. When the temperature inside the glass vessel reached 40°C or lower, the stirring was terminated, and the contents of the glass vessel were filtered with a 300-mesh stainless steel filter to yield a cationic aqueous dispersion <N-1>.

Example 43

A polyolefin copolymer <Q-2> was obtained by altering the polyolefin copolymer used for the quaternarization reaction to <P-18>, and by performing the same quaternarization reaction as in Example 42. Next, a cationic aqueous dispersion <N-2> was obtained by using the obtained polyolefin copolymer <Q-2>, by altering the amount of the organic solvent in the aqueous medium as shown in Table 4 and by performing the same operations of the preparation of an aqueous dispersion as in Example 42.

Comparative Example 5

In a 1-liter hermetically sealable, pressure proof glass vessel equipped with a stirrer and a heater, 140 g (20% by mass) of <R-1> prepared in Comparative Example 1 as the polyolefin copolymer, formic acid as an acid in an amount of 2.0-fold equivalent moles in relation to the number of moles of the hexylmaleimide unit of <R-1>, and 245 g (35% by mass) of n-propanol as an organic solvent in the aqueous medium were placed, and further distilled water was placed so as for the total amount of the raw materials to be 700 g. Next, the vessel was hermetically sealed, and the contents in the vessel were stirred and mixed with the rotation speed of the stirring blade set at 400 rpm. As a result of the stirring, no precipitate of the resin particulate substance was found in the bottom of the vessel and it was verified that the resin was in a suspended condition. Then, the power supply of the heater was turned on, the temperature inside the glass vessel was set at 130°C, and the contents of the vessel were further stirred for 120 minutes. Subsequently, the power supply of the heater was turned off, and the contents of the glass vessel were cooled while being stirred. When the temperature inside the glass vessel reached 40°C or lower, the stirring was terminated. However, the resin showed no changes from the conditions before the aqueous dispersion operation, and was not dispersed at all. The aqueous medium was also free from turbidity.

Comparative Example 6

In a 1-liter hermetically sealable, pressure proof glass vessel equipped with a stirrer and a heater, 140 g (20% by mass) of <R-2> prepared in Comparative Example 2 as the polyolefin copolymer and hydrochloric acid as an acid in an amount of 1.0-fold equivalent moles in relation to the number of moles of the dimethylaminopropylacrylamide unit of <R-2> were placed, and further distilled water was placed so as for the total amount of the raw materials to be 700 g. Next, the vessel was hermetically sealed, and the contents in the vessel were stirred and mixed with the rotation speed of the stirring blade set at 400 rpm. As a result of the stirring, no precipitate of the resin particulate substance was found in the bottom of the vessel and it was verified that the resin was in a suspended condition. Then, the power supply of the heater was turned on, the temperature inside the glass vessel was set at 130°C, and the contents of the vessel were further stirred for 120 minutes. Subsequently, the power supply of the heater was turned off, and the contents of the glass vessel were cooled while being stirred. When the temperature inside the glass vessel reached 40°C or lower, the stirring was terminated, and the contents of the glass vessel were filtered with a 300-mesh stainless steel filter to yield a cationic aqueous dispersion <O-1>.

Comparative Example 7

A cationic aqueous dispersion <O-2> was obtained by using <R-3> prepared in Comparative Example 3 as the polyolefin copolymer, and by performing the same operations as in Comparative Example 6.

Comparative Example 8

A cationic aqueous dispersion <O-3> was obtained by using the aminoacrylate-containing polyolefin copolymer E-A as the polyolefin copolymer, by setting the feed amount of hydrochloric acid as an acid at an amount of 1.0-fold equivalent moles in relation to the number of moles of the dimethylaminoethyl acrylate of E-A, and by performing the same operations as in Comparative Example 6.

Comparative Example 9

A cationic aqueous dispersion <O-4> was obtained by using <R-4> prepared in Comparative Example 4 as the polyolefin copolymer, and by performing the same operations as in Example 20.

Referential Example 1

In a 1-liter hermetically sealable, pressure proof glass vessel equipped with a stirrer and a heater, 140 g (20% by mass) of the anhydride-containing copolymer HX-8290 as a resin, triethylamine as a neutralizing agent in an amount of 2.0-fold equivalent moles in relation to the number of moles of the maleic anhydride unit of HX-8290, and 140 g (20% by mass) of n-propanol as an organic solvent in the aqueous medium were placed, and further distilled water was placed so as for the total amount of the raw materials to be 700 g. Next, the vessel was hermetically sealed, and the contents in the vessel were stirred and mixed with the rotation speed of the stirring blade set at 400 rpm. As a result of the stirring, no precipitate of the resin particulate substance was found in the bottom of the vessel and it was verified that the resin was in a suspended condition. Then, the power supply of the heater was turned on, the temperature inside the glass vessel was set at 130°C, and the contents of the vessel were further stirred for 120 minutes. Subsequently, the power supply of the heater was turned off, and the contents of the glass vessel were cooled while being stirred. When the temperature inside the glass vessel reached 40°C or lower, the stirring was terminated, and the contents of the glass vessel were filtered with a 300-mesh stainless steel filter to yield an anionic aqueous dispersion.

Referential Example 2

An anionic aqueous dispersion was obtained by performing the same operations as in Referential Example 1 except that the anhydride-containing copolymer E-A-MAH1 was used as the polyolefin copolymer.

The properties of the aqueous dispersions <M-1> to <M-22>, <N-1> and <N-2>obtained in Examples 20 to 43 are shown in Table 4, and the properties of the aqueous dispersions obtained in Comparative Examples 5 to 9 and Referential Examples 1 and 2 are shown in Table 5.

## [Table 4]

| | | | Example | | | | | | | | | | | | | | | | | | | | | | | | |
|---|---|---|---|---|---|---|---|---|---|---|---|---|---|---|---|---|---|---|---|---|---|---|---|---|---|---|---|
| | | | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 |
| | Name | | M-1 | M-2 | M-3 | M-4 | M-5 | M-6 | M-7 | M-8 | M-9 | N-10 | M-11 | M-12 | M-13 | M-14 | M-15 | M-16 | M-17 | M-18 | M-19 | M-20 | M-21 | M-22 | N-1 | N-2 |
| Aqueous dispersion composition | Polyolefin copolymer | Type | P-1 | P-2 | P-3 | P-4 | P-5 | P-6 | P-7 | P-8 | P-9 | P-6 | P-6 | Dispersion <M-10> of Example 29 was subjected to stripping. | P-10 | P-11 | P-12 | P-13 | P-14 | P-15 | P-16 | P-17 | P-18 | P-19 | Q-1 | Q-2 |
| | | % by mass | 20 | 20 | 20 | 20 | 20 | 20 | 20 | 20 | 20 | 20 | 20 | | 20 | 20 | 20 | 20 | 20 | 20 | 20 | 20 | 20 | 20 | 20 | 20 |
| | Acid | Type | Formic acid | Formic acid | Formic acid | Formic acid | Formic acid | Formic acid | Formic acid | Formic acid | Formic acid | Formic acid | Acetic acid | | Formic acid | Formic acid | Formic acid | Formic acid | Formic acid | Formic acid | Formic acid | Formic acid | Formic acid | Formic acid | - | - |
| | | Equivalent moles | 2 | 2 | 2 | 2 | 2 | 2 | 2 | 2 | 2 | 2 | 2 | | 2 | 2 | 2 | 2 | 2 | 2 | 2 | 2 | 2 | 2 | - | - |
| | Organic solvent in aqueous medium | Type | NPA | NPA | NPA | NPA | NPA | NPA | NPA | NPA | NPA | IPA | NPA | | THF | NPA | NPA | THF | NPA | NPA | NPA | NPA | NPA | NPA | NPA | NPA |
| | | % by mass | 35 | 25 | 25 | 25 | 10 | 25 | 25 | 25 | 25 | 25 | 25 | | 35 | 30 | 30 | 35 | 30 | 25 | 30 | 30 | 35 | 35 | 20 | 25 |
| Properties of aqueous dispersion | Aqueous dispersion yield (%) | | 39 | 92 | 100 | 100 | 100 | 100 | 100 | 100 | 100 | 100 | 100 | | 100 | 100 | 100 | 100 | 100 | 100 | 100 | 100 | 100 | 100 | 100 | 100 |
| | Stability | | G | G | G | G | G | G | G | G | G | G | G | G | G | G | G | G | G | G | G | G | G | G | G | G |
| | Number average particle size (nm) | | 311 | 120 | 68 | 13 | 11 | 59 | 41 | 63 | 56 | 61 | 93 | 65 | 171 | 52 | 84 | 96 | 64 | 55 | 79 | 97 | 89 | 111 | 63 | 59 |
| | Volume average particle size (nm) | | 740 | 254 | 99 | 16 | 14 | 68 | 62 | 76 | 64 | 73 | 188 | 77 | 301 | 61 | 130 | 198 | 79 | 88 | 121 | 169 | 171 | 237 | 88 | 86 |
| | Solid content concentration (% by mass) | | 8.9 | 18.5 | 20.1 | 20.0 | 19.8 | 20.0 | 20.1 | 20.2 | 19.9 | 20.0 | 19.9 | 20.0 | 20.1 | 20.1 | 19.8 | 19.4 | 20.1 | 19.9 | 20.0 | 20.1 | 19.8 | 19.8 | 20.0 | 20.1 |
| | Viscosity (mPa·S) | | 4 | 98 | 193 | 351 | 860 | 113 | 76 | 119 | 110 | 104 | 94 | 35 | 14 | 88 | 231 | 121 | 441 | 81 | 97 | 101 | 79 | 201 | 206 | 91 |
| | pH | | 3.0 | 3.2 | 3.2 | 3.4 | 3.0 | 3.2 | 3.2 | 3.2 | 3.2 | 3.2 | 3.9 | 3.4 | 3.1 | 3.1 | 3.3 | 3.4 | 3.3 | 3.3 | 3.4 | 3.4 | 3.3 | 3.4 | 2.6 | 2.6 |

| Properties of coating film | | C1 | C2 | C3 | C4 | C5 | C6 | C7 | C8 | C9 | C10 | C11 | C12 | C13 | C14 | C15 | C16 | C17 | C18 | C19 | C20 | C21 | C22 | C23 | C24 |
|---|---|---|---|---|---|---|---|---|---|---|---|---|---|---|---|---|---|---|---|---|---|---|---|---|---|
| Cohesive-ness | PE | G | G | G | G | G | G | G | G | G | G | G | G | G | G | G | G | G | G | G | G | G | G | G | G |
| | OPP | G | G | G | G | G | G | G | G | G | G | G | G | G | G | G | G | G | G | G | G | G | G | G | G |
| | PET | A | G | G | G | G | G | G | G | A | G | A | A | G | G | G | G | G | G | G | G | G | G | G | G |
| | Ny6 | A | G | G | G | G | G | G | A | G | A | A | A | G | G | G | G | G | A | G | G | G | G | G | A |
| | Glass plate | G | G | G | G | G | G | G | G | G | G | G | G | G | G | G | G | G | G | G | G | G | G | G | G |
| Adhesiveness (N/15mm) | | 3.4 | 5.2 | 6.1 | 6.3 | 6.4 | 6.5 | 3.7 | 6.4 | 6.5 | 6.6 | 6.3 | 6.4 | 3.3 | 2.2 | 4.5 | 3.8 | 5.1 | 4.0 | 4.9 | 7.9 | 3.0 | 6.8 | 6.8 | 2.6 |
| Heat resistance (N/15mm) | | 0.1 | 0.2 | 0.7 | 2.3 | 2.9 | 0.5 | 0.3 | 0.5 | 0.5 | 0.6 | 0.5 | 0.5 | 0.3 | 0.5 | 1.6 | 1.9 | 1.1 | 0.3 | 0.3 | 0.5 | 0.6 | 1.8 | 0.4 | 0.6 |
| Water resistance | | G | G | G | G | A | G | G | G | G | G | G | G | G | G | G | G | G | G | G | G | G | G | A | A |
| Solvent resistance test (i) | | G | G | G | G | G | G | P | G | G | A | A | A | A | G | A | G | G | G | G | G | G | G | G | G |
| Solvent resistance test (ii) | | G | G | G | A | P | A | P | P | A | A | A | P | P | G | A | G | A | P | P | A | G | A | A | G |

The abbreviations in Table 4 are as follows:

NPA: n-Propanopl

IPA: Isopropanol

THF: Tetrahydrofuran

DES: Diethyl sulfate

[Table 5]

| | | | Comparative Example | | | | | Referential Examples | |
|---|---|---|---|---|---|---|---|---|---|
| | | | 5 | 6 | 7 | 8 | 9 | 1 | 2 |
| Name | | | - | O-1 | O-2 | O-3 | O-4 | - | - |
| Aqueous dispersion composition | Polyolefin copolymer | Type | R-1 | R-2 | R-3 | E-A | R-4 | HX8290 | E-A-MAH1 |
| | | % by mass | 20 | 20 | 20 | 20 | 20 | 20 | 20 |
| | Acid | Type | Formic acid | Hydrochloric acid | Hydrochloric acid | Hydrochloric acid | Formic acid | - | - |
| | | Equivalent moles | 2 | 1 | 1 | 1 | 2 | - | - |
| | Organic solvent in aqueous medium | Type | NPA | - | - | - | - | NPA | NPA |
| | | % by mass | 35 | 0 | 0 | 0 | 0 | 20 | 20 |
| Properties of aqueous dispersion | Aqueous dispersion yield (%) | | 0 | 100 | 100 | 100 | 100 | 100 | 100 |
| | Stability | | P | G | G | G | G | G | G |
| | Number average particle size (nm) | | | 110 | 91 | 50 | 22 | 71 | 52 |
| | Volume average particle size (nm) | | | 235 | 120 | 71 | 31 | 98 | 73 |
| | Solid content concentration (% by mass) | | | 20.0 | 20.1 | 19.9 | 20.0 | 20.1 | 20.0 |
| | Viscosity (mPa•S) | | | 75 | 136 | 210 | 774 | 100 | 161 |
| | pH | | | 4.0 | 3.5 | 3.2 | 2.8 | 9.8 | 9.9 |
| Properties of coating film | Cohesiveness | PE | No aqueous dispersion was obtained. | A | A | G | G | G | G |
| | | OPP | | P | P | A | G | G | G |
| | | PET | | A | A | G | G | G | G |
| | | Ny6 | | P | P | A | G | G | G |
| | | Glass plate | | P | P | A | A | G | G |
| | Adhesiveness (N/15mm) | | | 1.7 | 1.1 | 3.2 | 6.0 | 8.5 | 7.6 |
| | Heat resistance (N/15mm) | | | 0.1 | 0.0 | 0.0 | 3.1 | 0.1 | 0.1 |
| | Water resistance | | | P | P | P | P | G | G |
| | Solvent resistance test (i) | | | P | P | P | P | G | G |
| | Solvent resistance test (ii) | | | P | P | P | P | A | A |

The abbreviations in Table 5 are as follows:

NPA: n-Propanol

TEA: Triethylamine

Example 44

The aqueous dispersion <M-18> obtained in Example 37 and a polyvalent oxazoline compound (Epocross WS700, aqueous solution of polyvalent oxazoline group-containing copolymer, pH:8.0, solid content concentration: 25% by mass, manufactured by Nippon Shokubai Co., Ltd.) as a cross-linking agent were mixed together with stirring. The mixing ratio was such that the amount of the solid content of the polyvalent oxazoline compound was 5 parts by mass in relation to 100 parts by mass of the resin solid content of the aqueous dispersion <M-18>. The obtained aqueous dispersion had a pH of 4.4, and was excellent in mixing stability, free from the aggregation and the precipitation of the solid content and uniform.

Examples 45 to 47

In each of Examples 45 to 47, the type of the aqueous dispersion was altered as shown in Table 6, and the same operations as in Example 44 were performed. All of Examples 45 to 47 were excellent in mixing stability and free from the aggregation and the precipitation of the solid content, and yielded uniform aqueous dispersions.

Example 48

The aqueous dispersion <M-19> obtained in Example 38 and a polyvalent hydrazide compound (aqueous solution of adipic acid dihydrazide, pH:8.0, solid content concentration: 8% by mass, manufactured by Otsuka Chmeical Co., Ltd.) as a cross-linking agent were mixed together with stirring. The mixing ratio was such that the amount of the solid content of the polyvalent hydrazide compound was 2 parts by mass in relation to 100 parts by mass of the resin solid content of the aqueous dispersion <M-19>. The obtained aqueous dispersion had a pH of 4.2, and was excellent in mixing stability, free from the aggregation and the precipitation of the solid content and uniform.

Comparative Examples 10 and 11

The same operations as in Example 44 were performed except that the types of the aqueous dispersions were altered as shown in Table 6, and thus aqueous dispersions were obtained in both of Examples 10 and 11.

The properties of the aqueous dispersions obtained in Examples 44 to 47 and Comparative Examples 10 and 11 are shown in Table 6.

[Table 6]

| | | | Example | | | | | Comparative Example | |
|---|---|---|---|---|---|---|---|---|---|
| | | | 44 | 45 | 46 | 47 | 48 | 10 | 11 |
| Aqueous dispersion composition | Type of aqueous dispersion | | M-18 | M-19 | M-20 | M-21 | M-19 | O-1 | O-3 |
| | Type of cross-linking agent | | WS700 | WS700 | WS700 | WS700 | ADH | WS700 | WS700 |
| | Aqueous dispersion/cross-linking agent (solid content mass ratio) | | 100/5 | 100/5 | 100/5 | 100/5 | 100/2 | 100/5 | 100/5 |
| pH of aqueous dispersion | | | 4.4 | 4.6 | 4.7 | 4.2 | 4.2 | 4.9 | 4.2 |
| Properties of coating film | Cohesiveness | PE | G | G | G | G | G | A | G |
| | | OPP | G | G | G | G | G | P | A |
| | | PET | G | G | G | G | G | A | G |
| | | Ny6 | G | G | G | G | G | P | A |
| | | Glass plate | G | G | G | G | G | P | A |
| | Adhesiveness (N/15mm) | | 3.8 | 4.2 | 7.4 | 3.7 | 4.5 | 1.5 | 2.9 |
| | Heat resistance (N/15mm) | | 0.4 | 0.6 | 1.3 | 1.3 | 0.6 | 0.0 | 0.0 |
| | Water resistance | | G | G | G | G | G | P | P |
| | Solvent resistance test (i) | | G | G | G | G | G | P | P |
| | Solvent resistance test (ii) | | A | G | G | G | G | P | P |

The abbreviations in Table 6 are as follows:

WS700: Polyvalent oxazoline compound

ADH: Adipic acid dihydrazide

From the results of Examples 1 to 19, it has been verified that the polyolefin copolymer can be obtained by heating at a temperature of 50 to 300°C and subjecting to an imidization reaction an anhydride-containing copolymer, including as the constituent components thereof an olefin hydrocarbon unit and an unsaturated carboxylic acid anhydride unit, and an amino compound.

From the results of Examples 20 to 30 and 32 to 43, it has been verified that the polyolefin copolymer including as the olefin hydrocarbon unit either the ethylene unit as the main component or the propylene unit as the main component can be easily dispersed in an aqueous medium, and thus a cationic aqueous dispersion can be prepared therefrom. The exterior appearance of each of the obtained aqueous dispersions was free from coloration and milky white.

In Example 31, it has been verified that even in the case where the desolventizing by stripping has been performed, the aqueous dispersion of the present invention can be obtained.

The aqueous dispersions obtained in Examples 20 to 43 were able to satisfactorily form coating films on various substrates, and these coating films had an excellent cohesiveness, and further, were also excellent in adhesiveness, heat resistance, water resistance and solvent resistance.

From the results of Examples 20 to 24, it has been verified that with the increase of the content (mol%), in the polyolefin copolymer, of the N-substituted imide unit derived from an unsaturated carboxylic acid anhydride unit, the heat resistance tends to be improved.

From the results of Examples 26, 37 and 38, it has been verified that with the increase of the acid number (the content of the unsaturated carboxylic acid) of the polyolefin copolymer, the adhesiveness and the cohesiveness are more improved.

From the results of Examples 44 to 48, it has been verified that when an aqueous dispersion having an acid number of the polyolefin copolymer of 0.1 to 50 mg KOH/g is used, the coating film obtained by mixing a cross-linking agent having in the molecule thereof a plurality of functional groups reacting with the carboxyl group undergoes improvement of the properties such as the heat resistance and the solvent resistance. This is an effect ascribable to the formation of the cross-linked structure due to the reaction between the carboxyl groups contained in the polyolefin copolymer and the cross-linking agent.

In Comparative Example 5, a resin different in structure from the polyolefin copolymer was used, and consequently the preparation of the aqueous dispersion was unsuccessful.

In Comparative Examples 6 and 7, cationic aqueous dispersions were able to be obtained with such resins as described in JP06-1921A and by dispersing the resins together with an acid. However, the coating films obtained from these aqueous dispersions were poor in cohesiveness, adhesiveness, heat resistance, water resistance and solvent resistance, from the reasons such that the content (mol%) of the aminoalkylacrylamide unit in the resin was large, and the catalyst required for amidation was contained. In Comparative Examples 6 and 7, the heat resistance was poor irrespective of the content of the aminoalkylacrylamide unit.

In Comparative Example 8, a cationic aqueous dispersion was able to be obtained by aqueously dispersing together with an acid; however, because an ethylene-aminoalkylacrylate copolymer was used, the coating film obtained from the aqueous dispersion was poor in heat resistance, water resistance and solvent resistance.

In Comparative Example 9, because the content of the N-substituted imide unit, derived from an unsaturated carboxylic acid anhydride unit, in the polyolefin copolymer exceeded the range specified in the present invention, the coating film obtained from the aqueous dispersion was poor in water resistance and solvent resistance.

In Comparative Example 10, because the aqueous dispersion <O-1> obtained in Comparative Example 6 was used, even when a cross-linking agent having in the molecule thereof a plurality of functional groups reacting with the carboxyl group was mixed with the aqueous dispersion, the obtained coating film was poor in cohesiveness, adhesiveness, heat resistance, water resistance and solvent resistance.

In Comparative Example 11, because the aqueous dispersion <O-3> obtained in Comparative Example 8 was used, even when a cross-linking agent having in the molecule thereof a plurality of functional groups reacting with the carboxyl group was mixed with the aqueous dispersion, the obtained coating film was poor in heat resistance, water resistance and solvent resistance.

Referential Examples 1 and 2 are heretofore known anionic aqueous dispersions, and are unstable in the acidic region. The obtained coating films were excellent in cohesiveness, adhesiveness, water resistance and solvent resistance, but were poor in heat resistance irrespective of the content of maleic anhydride in the resin.

Industrial Applicability

The polyolefin copolymer makes it possible to prepare therefrom an aqueous dispersion stable in the acidic region, even when the content of the N-substituted imide unit was small, and also even when no nonvolatile aqueous dispersing aid is contained.

**Claims**

1. An aqueous dispersion in which a polyolefin copolymer is dispersed in an aqueous medium, the aqueous dispersion being **characterized in that** a number average particle size of the polyolefin copolymer in the aqueous dispersion is 1000 nm or less,
   wherein the polyolefin copolymer comprises an olefin hydrocarbon unit and an N-substituted imide unit derived from an unsaturated carboxylic acid anhydride unit,
   a content of the N-substituted imide unit derived from an unsaturated carboxylic acid anhydride unit in the polyolefin copolymer is 0.1 mol % or more and less than 10 mol%; and
   an N-substituent of the N-substituted imide unit derived from an unsaturated carboxylic acid anhydride unit is a substituent represented by the following formula (I):

$$-(CH_2)_nNR^1R^2 \qquad (I)$$

   wherein $R^1$ and $R^2$ each represent an alkyl group having 1 to 5 carbon atoms or a hydroxyalkyl group having 1 to 5 carbon atoms, and n represents an integer of 1 to 5.

2. The aqueous dispersion according to claim 1, **characterized in that**:

   the N-substituent of the N-substituted imide unit derived from an unsaturated carboxylic acid anhydride unit, of the polyolefin copolymer, in the aqueous dispersion is a substituent represented by the following formula (III) :

$$-(CH_2)_nN^+HR^1R^2 \bullet X^- \qquad (III)$$

   wherein $R^1$ and $R^2$ each represent an alkyl group having 1 to 5 carbon atoms or a hydroxyalkyl group having 1 to 5 carbon atoms, $X^-$ represents an anionic counterion and n represents an integer of 1 to 5.

3. The aqueous dispersion according to claim1 or 2, **characterized in that** the polyolefin copolymer in the aqueous dispersion comprises as a constituent component an unsaturated carboxylic acid unit and an acid number of the polyolefin copolymer is 0.1 to 50 mg KOH/g.

4. The aqueous dispersion according to any one of claims 1 to 3, **characterized by** containing an acid.

5. The aqueous dispersion according to any one of claims 1 to 3, **characterized by** containing no nonvolatile aqueous dispersing aid.

6. The aqueous dispersion according to any one of claims 1 to 3, **characterized by** containing a cross-linking agent having a functional group reacting with a carboxyl group.

7. An aqueous dispersion in which a polyolefin copolymer is dispersed in an aqueous medium, the aqueous dispersion being **characterized in that** a number average particle size of the polyolefins copolymer in the aqueous dispersion is 1000 nm or less,
   wherein the polyolefin copolymer comprises an olefin hydrocarbon unit and an N-substituted imide unit derived from an unsaturated carboxylic acid anhydride unit,
   a content of the N-substituted imide unit derived from an unsaturated carboxylic acid anhydride unit in the polyolefin copolymer is 0.1 mol % or more and less than 10 mol %; and
   an N-substituent of the N-substituted imide unit derived from an unsaturated carboxylic acid anhydride unit is a substituent represented by the following formula (II):

$$-(CH_2)_nN^+R^3R^4R^5 \bullet X^- \qquad (II)$$

wherein $R^3$ and $R^4$ each represent an alkyl group having 1 to 5 carbon atoms or a hydroxyalkyl group having 1 to 5 carbon atoms, $R^5$ represents a residue of a quaternarizing agent introduced by a quaternarization reaction, $X^-$ represents an anionic counterion and n represents an integer of 1 to 5.

8. The aqueous dispersion according to claim 7, **characterized in that** the polyolefin copolymer in the aqueous dispersion comprises as a constituent component an unsaturated carboxylic acid unit and an acid number of the polyolefin copolymers is 0.1 to 50 mg KOH/g.

9. The aqueous dispersion according to claim 7 or 8, **characterized by** containing no nonvolatile aqueous dispersing aid.

10. The aqueous dispersion according to claim 7 or 8, **characterized by** containing a cross-linking agent having a functional group reacting with a carboxyl group.

11. A laminate in which a resin layer is formed on at least part of a substrate, wherein the resin layer is obtained by coating at least part of the substrate with the aqueous dispersion according to any one of claims 1, 2, 3, 7 and 8.

12. A method for manufacturing the aqueous dispersion as claimed in claim 1 or 2, **characterized in that** a polyolefin copolymer, an aqueous medium and an acid are stirred at 80 to 250°C,
wherein the polyolefin copolymer comprises an olefin hydrocarbon unit and an N-substituted imide unit derived from an unsaturated carboxylic acid anhydride unit,
a content of the N-substituted imide unit derived from an unsaturated carboxylic acid anhydride unit in the polyolefin copolymer is 0.1 mol % or more and less than 10 mol %; and
an N-substituent of the N-substituted imide unit derived from an unsaturated carboxylic acid anhydride unit is a substituent represented by the following formula (I):

$$-(CH_2)_nNR^1R^2 \qquad (I)$$

wherein $R^1$ and $R^2$ each represent an alkyl group having 1 to 5 carbon atoms or a hydroxyalkyl group having 1 to 5 carbon atoms, and n represents an integer of 1 to 5.

13. A method for manufacturing the aqueous dispersion as claimed in claim 7, **characterized in that** a polyolefin copolymer and an aqueous medium are stirred at 80 to 250°C,
wherein the polyolefin copolymer comprises an olefin hydrocarbon unit and an N-substituted imide unit derived from an unsaturated carboxylic acid anhydride unit,
a content of the N-substituted imide unit derived from an unsaturated carboxylic acid anhydride unit in the polyolefin copolymer is 0.1 mol % or more and less than 10 mol %; and
an N-substituent of the N-substituted imide unit derived from an unsaturated carboxylic acid anhydride unit is a substituent represented by the following formula (II):

$$-(CH_2)_nN^+R^3R^4R^5 \bullet X^- \qquad (II)$$

wherein $R^3$ and $R^4$ each represent an alkyl group having 1 to 5 carbon atoms or a hydroxyalkyl group having 1 to 5 carbon atoms, $R^5$ represents a residue of a quaternarizing agent introduced by a quaternarization reaction, $X^-$ represents an anionic counterion and n represents an integer of 1 to 5.

14. The method according to claim 12 or 13, **characterized in that** the polyolefin copolymer comprises as a constituent component an unsaturated carboxylic acid unit and an acid number of the polyolefin copolymer is 0.1 to 50 mg KOH/g.

**Patentansprüche**

1. Wässrige Dispersion, in welcher ein Polyolefin-Copolymer in einem wässrigen Medium dispergiert ist, wobei die wässrige Dispersion **dadurch gekennzeichnet ist, dass** eine zahlenmittlere Teilchengröße des Polyolefin-Copolymers in der wässrigen Dispersion 1000 nm oder weniger beträgt,
wobei das Polyolefin-Copolymer eine Olefinkohlenwasserstoffeinheit und eine N-substituierte Imideinheit umfasst, die von einer ungesättigten Carbonsäureanhydrideinheit abgeleitet ist,

ein Gehalt der N-substituierten Imideinheit, die von einer ungesättigten Carbonsäureanhydrideinheit abgeleitet ist, im Polyolefin-Copolymer 0,1 mol% oder mehr und weniger als 10 mol% beträgt; und

ein N-Substituent der N-substituierten Imideinheit, die von einer ungesättigten Carbonsäureanhydrideinheit abgeleitet ist, ein Substituent ist, der durch die folgende Formel (I) dargestellt ist:

$$-(CH_2)_n NR^1 R^2 \qquad (I)$$

wobei $R^1$ und $R^2$ jeweils eine Alkylgruppe mit 1 bis 5 Kohlenstoffatomen oder eine Hydroxyalkylgruppe mit 1 bis 5 Kohlenstoffatomen darstellen, und n eine ganze Zahl von 1 bis 5 darstellt.

2. Wässrige Dispersion nach Anspruch 1, **dadurch gekennzeichnet, dass**:

der N-Substituent der N-substituierten Imideinheit, die von einer ungesättigten Carbonsäureanhydrideinheit abgeleitet ist, des Polyolefin-Copolymers in der wässrigen Dispersion ein Substituent ist, der durch die folgende Formel (III) dargestellt ist:

$$-(CH_2)_n N^+ H R^1 R^2 \bullet X^- \qquad (III)$$

wobei $R^1$ und $R^2$ jeweils eine Alkylgruppe mit 1 bis 5 Kohlenstoffatomen oder eine Hydroxyalkylgruppe mit 1 bis 5 Kohlenstoffatomen darstellen, $X^-$ ein anionisches Gegenion darstellt, und n eine ganze Zahl von 1 bis 5 darstellt.

3. Wässrige Dispersion nach Anspruch 1 oder 2, **dadurch gekennzeichnet, dass** das Polyolefin-Copolymer in der wässrigen Dispersion eine ungesättigte Carbonsäureeinheit als einen Bestandteil umfasst, und eine Säurezahl des Polyolefin-Copolymers 0,1 bis 50 mg KOH/g ist.

4. Wässrige Dispersion nach einem der Ansprüche 1 bis 3, **dadurch gekennzeichnet, dass** sie eine Säure enthält.

5. Wässrige Dispersion nach einem der Ansprüche 1 bis 3, **dadurch gekennzeichnet, dass** sie kein nichtflüchtiges wässriges Dispergierhilfsmittel enthält.

6. Wässrige Dispersion nach einem der Ansprüche 1 bis 3, **dadurch gekennzeichnet, dass** sie ein Vernetzungsmittel mit einer funktionellen Gruppe enthält, die mit einer Carboxylgruppe reagiert.

7. Wässrige Dispersion, in welcher ein Polyolefin-Copolymer in einem wässrigen Medium dispergiert ist, wobei die wässrige Dispersion **dadurch gekennzeichnet ist, dass** eine zahlenmittlere Teilchengröße des Polyolefin-Copolymers in der wässrigen Dispersion 1000 nm oder weniger beträgt,

wobei das Polyolefin-Copolymer eine Olefinkohlenwasserstoffeinheit und eine N-substituierte Imideinheit umfasst, die von einer ungesättigten Carbonsäureanhydrideinheit abgeleitet ist,

ein Gehalt der N-substituierten Imideinheit, die von einer ungesättigten Carbonsäureanhydrideinheit abgeleitet ist, im Polyolefin-Copolymer 0,1 mol% oder mehr und weniger als 10 mol% beträgt; und

ein N-Substituent der N-substituierten Imideinheit, die von einer ungesättigten Carbonsäureanhydrideinheit abgeleitet ist, ein Substituent ist, der durch die folgende Formel (II) dargestellt ist:

$$\mathbf{-(CH_2)_n N^+ R^3 R^4 R^5 \bullet X^-} \qquad \mathbf{(II)}$$

wobei $R^3$ und $R^4$ jeweils eine Alkylgruppe mit 1 bis 5 Kohlenstoffatomen oder eine Hydroxyalkylgruppe mit 1 bis 5 Kohlenstoffatomen darstellen, $R^5$ einen Rückstand eines Quaternisierungsmittels darstellt, das durch eine Quaternisierungsreaktion eingeführt ist, $X^-$ ein anionisches Gegenion darstellt, und n eine ganze Zahl von 1 bis 5 darstellt.

8. Wässrige Dispersion nach Anspruch 7, **dadurch gekennzeichnet, dass** das Polyolefin-Copolymer in der wässrigen Dispersion eine ungesättigte Carbonsäureeinheit als einen Bestandteil umfasst, und eine Säurezahl des Polyolefin-Copolymers 0,1 bis 50 mg KOH/g ist.

9. Wässrige Dispersion nach Anspruch 7 oder 8, **dadurch gekennzeichnet, dass** sie kein nichtflüchtiges wässriges Dispergierhilfsmittel enthält.

10. Wässrige Dispersion nach Anspruch 7 oder 8, **dadurch gekennzeichnet, dass** sie ein Vernetzungsmittel mit einer funktionellen Gruppe enthält, die mit einer Carboxylgruppe reagiert.

11. Laminat, in welchem eine Harzschicht wenigstens auf einem Teil eines Substrats ausgebildet ist, wobei die Harzschicht durch Beschichten wenigstens eines Teils des Substrats mit der wässrigen Dispersion nach einem der Ansprüche 1, 2, 3, 7 und 8 erhalten wird.

12. Verfahren zur Herstellung der wässrigen Dispersion nach Anspruch 1 oder 2, **dadurch gekennzeichnet, dass** ein Polyolefin-Copolymer, ein wässriges Medium und eine Säure bei 80°C bis 250°C verrührt werden,
wobei das Polyolefin-Copolymer eine Olefinkohlenwasserstoffeinheit und eine N-substituierte Imideinheit umfasst, die von einer ungesättigten Carbonsäureanhydrideinheit abgeleitet ist,
ein Gehalt der N-substituierten Imideinheit, die von einer ungesättigten Carbonsäureanhydrideinheit abgeleitet ist, im Polyolefin-Copolymer 0,1 mol% oder mehr und weniger als 10 mol% beträgt; und
ein N-Substituent der N-substituierten Imideinheit, die von einer ungesättigten Carbonsäureanhydrideinheit abgeleitet ist, ein Substituent ist, der durch die folgende Formel (I) dargestellt ist:

$$-(CH_2)_n NR^1R^2 \qquad (I)$$

wobei $R^1$ und $R^2$ jeweils eine Alkylgruppe mit 1 bis 5 Kohlenstoffatomen oder eine Hydroxyalkylgruppe mit 1 bis 5 Kohlenstoffatomen darstellen, und n eine ganze Zahl von 1 bis 5 darstellt.

13. Verfahren zur Herstellung der wässrigen Dispersion nach Anspruch 7, **dadurch gekennzeichnet, dass** ein Polyolefin-Copolymer und ein wässriges Medium bei 80°C bis 250°C verrührt werden,
wobei das Polyolefin-Copolymer eine Olefinkohlenwasserstoffeinheit und eine N-substituierte Imideinheit umfasst, die von einer ungesättigten Carbonsäureanhydrideinheit abgeleitet ist,
ein Gehalt der N-substituierten Imideinheit, die von einer ungesättigten Carbonsäureanhydrideinheit abgeleitet ist, im Polyolefin-Copolymer 0,1 mol% oder mehr und weniger als 10 mol% beträgt; und
ein N-Substituent der N-substituierten Imideinheit, die von einer ungesättigten Carbonsäureanhydrideinheit abgeleitet ist, ein Substituent ist, der durch die folgende Formel (II) dargestellt ist:

$$-(CH_2)_n N^+R^3R^4R^5 \bullet X^- \qquad (II)$$

wobei $R^3$ und $R^4$ jeweils eine Alkylgruppe mit 1 bis 5 Kohlenstoffatomen oder eine Hydroxyalkylgruppe mit 1 bis 5 Kohlenstoffatomen darstellen, $R^5$ einen Rückstand eines Quaternisierungsmittels darstellt, das durch eine Quaternisierungsreaktion eingeführt ist, $X^-$ ein anionisches Gegenion darstellt, und n eine ganze Zahl von 1 bis 5 darstellt.

14. Verfahren nach Anspruch 12 oder 13, **dadurch gekennzeichnet, dass** das Polyolefin-Copolymer eine ungesättigte Carbonsäureeinheit als einen Bestandteil umfasst, und eine Säurezahl des Polyolefin-Copolymers 0,1 bis 50 mg KOH/g ist.

**Revendications**

1. Dispersion aqueuse dans laquelle est dispersé un copolymère de polyoléfine dans un milieu aqueux, la dispersion aqueuse étant **caractérisée en ce qu'**une taille de particules moyenne en nombre du copolymère de polyoléfine dans la dispersion aqueuse est inférieure ou égale à 1000 nm,
où le copolymère de polyoléfine comprend une unité d'hydrocarbure oléfinique et une unité imide substituée par N dérivée d'une unité anhydride d'acide carboxylique insaturé,
une teneur en unité imide substituée par N dérivée d'une unité anhydride d'acide carboxylique insaturé dans le copolymère de polyoléfine est supérieure ou égale à 0,1% en moles et inférieure à 10% en moles ; et
un substituant N de l'unité imide substituée par N dérivée d'une unité anhydride d'acide carboxylique insaturé est un substituant représenté par la formule (I) suivante :

$$-(CH_2)_n NR^1R^2 \qquad (I)$$

où $R^1$ et $R^2$ représentent chacun un groupe alkyle ayant 1 à 5 atomes de carbone ou un groupe hydroxyalkyle ayant 1 à 5 atomes de carbone, et n représente un nombre entier allant de 1 à 5.

2. Dispersion aqueuse selon la revendication 1, **caractérisée en ce que** :

le substituant N de l'unité imide substituée par N dérivée d'une unité anhydride d'acide carboxylique insaturé, du copolymère de polyoléfine, dans la dispersion aqueuse est un substituant représenté par la formule (III) suivante :

$$-(CH_2)_nN^+HR^1R^2 \bullet X^- \qquad (III)$$

où $R^1$ et $R^2$ représentent chacun un groupe alkyle ayant 1 à 5 atomes de carbone ou un groupe hydroxyalkyle ayant 1 à 5 atomes de carbone, $X^-$ représente un contre-ion anionique et n représente un nombre entier allant de 1 à 5.

3. Dispersion aqueuse selon la revendication 1 ou 2, **caractérisée en ce que** le copolymère de polyoléfine dans la dispersion aqueuse comprend, comme composant constitutif, une unité d'acide carboxylique insaturé et un indice d'acidité du copolymère de polyoléfine est de 0,1 à 50 mg de KOH/g.

4. Dispersion aqueuse selon l'une quelconque des revendications 1 à 3, **caractérisée par** le fait de contenir un acide.

5. Dispersion aqueuse selon l'une quelconque des revendications 1 à 3, **caractérisée par** le fait de ne contenir aucun agent de dispersion aqueux non volatil.

6. Dispersion aqueuse selon l'une quelconque des revendications 1 à 3, **caractérisée par** le fait de contenir un agent de réticulation ayant un groupe fonctionnel réagissant avec un groupe carboxyle.

7. Dispersion aqueuse dans laquelle un copolymère de polyoléfine est dispersé dans un milieu aqueux, la dispersion aqueuse étant **caractérisée en ce qu'**une taille de particules moyenne en nombre du copolymère de polyoléfine dans la dispersion aqueuse est inférieure ou égale à 1000 nm,
où le copolymère de polyoléfine comprend une unité d'hydrocarbure oléfinique et une unité imide substituée par N dérivée d'une unité anhydride d'acide carboxylique insaturé,
une teneur en unité imide substituée par N dérivée d'une unité anhydride d'acide carboxylique insaturé dans le copolymère de polyoléfine est supérieure ou égale à 0,1% en moles et inférieure à 10% en moles ; et
un substituant N de l'unité imide substituée par N dérivée d'une unité anhydride d'acide carboxylique insaturé est un substituant représenté par la formule (II) suivante

$$-(CH_2)_nN^+R^3R^4R^5 \bullet X^- \qquad (II)$$

où $R^3$ et $R^4$ représentent chacun un groupe alkyle ayant 1 à 5 atomes de carbone ou un groupe hydroxyalkyle ayant 1 à 5 atomes de carbone, $R^5$ représente un résidu d'un agent quaternisant introduit par une réaction de quaternisation, $X^-$ représente un contre-ion anionique et n représente un nombre entier allant de 1 à 5.

8. Dispersion aqueuse selon la revendication 7, **caractérisée en ce que** le copolymère de polyoléfine dans la dispersion aqueuse comprend, comme composant constitutif, une unité d'acide carboxylique insaturé et un indice d'acidité du copolymère de polyoléfine est de 0,1 à 50 mg de KOH/g.

9. Dispersion aqueuse selon la revendication 7 ou 8, **caractérisée par** le fait de ne contenir aucun agent de dispersion aqueux non volatil.

10. Dispersion aqueuse selon la revendication 7 ou 8, **caractérisée par** le fait de contenir un agent de réticulation ayant un groupe fonctionnel réagissant avec un groupe carboxyle.

11. Stratifié dans lequel une couche de résine est formée sur au moins une partie d'un substrat, où la couche de résine est obtenue par enduction d'au moins une partie du substrat avec la dispersion aqueuse selon l'une quelconque des revendications 1, 2, 3, 7 et 8.

12. Procédé de fabrication de la dispersion aqueuse tel que revendiqué dans la revendication 1 ou 2, **caractérisé en ce qu'**un copolymère de polyoléfine, un milieu aqueux et un acide sont agités à une température allant de 80 à 250°C, où le copolymère de polyoléfine comprend une unité d'hydrocarbure oléfinique et une unité imide substituée par N dérivée d'une unité anhydride d'acide carboxylique insaturé,
une teneur en unité imide substituée par N dérivée d'une unité anhydride d'acide carboxylique insaturé dans le copolymère de polyoléfine est supérieure ou égale à 0,1% en moles et inférieure à 10% en moles ; et
un substituant N de l'unité imide substituée par N dérivée d'une unité anhydride d'acide carboxylique insaturé est un substituant représenté par la formule (I) suivante :

$$-(CH_2)_nNR^1R^2 \qquad (I)$$

où $R^1$ et $R^2$ représentent chacun un groupe alkyle ayant 1 à 5 atomes de carbone ou un groupe hydroxyalkyle ayant 1 à 5 atomes de carbone, et n représente un nombre entier allant de 1 à 5.

13. Procédé de fabrication de la dispersion aqueuse tel que revendiqué dans la revendication 7, **caractérisé en ce qu'**un copolymère de polyoléfine et un milieu aqueux sont agités à une température allant de 80 à 250°C, où le copolymère de polyoléfine comprend une unité d'hydrocarbure oléfinique et une unité imide substituée par N dérivée d'une unité anhydride d'acide carboxylique insaturé, une teneur en unité imide substituée par N dérivée d'une unité anhydride d'acide carboxylique insaturé dans le copolymère de polyoléfine est supérieure ou égale à 0,1% en moles et inférieure à 10% en moles ; et un substituant N de l'unité imide substituée par N dérivée d'une unité anhydride d'acide carboxylique insaturé est un substituant représenté par la formule (II) suivante :

$$-(CH_2)_nN^+R^3R^4R^5 \bullet X^- \qquad (II)$$

où $R^3$ et $R^4$ représentent chacun un groupe alkyle ayant 1 à 5 atomes de carbone ou un groupe hydroxyalkyle ayant 1 à 5 atomes de carbone, $R^5$ représente un résidu d'un agent quaternisant introduit par une réaction de quaternisation, $X^-$ représente un contre-ion anionique et n représente un nombre entier allant de 1 à 5.

14. Procédé selon la revendication 12 ou 13, **caractérisé en ce que** le copolymère de polyoléfine comprend, comme composant constitutif, une unité d'acide carboxylique insaturé et un indice d'acidité du copolymère de polyoléfine est de 0,1 à 50 mg de KOH/g.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003119328 A
- US 3444151 A
- JP 4716542A B
- JP 7076623 A
- JP 47016542 A
- JP 6001921 A
- JP 061921A A

- US 34441515 B
- JP 5194660 A
- GB 2091745 A
- US 4617366 A
- US 644044 E
- WO 2004104090 A
- JP 60079008 A
- JP 53006194 B

**Non-patent literature cited in the description**

- *JIS K7210,* 1999